# EUROPÄISCHE PATENTSCHRIFT

(11) **EP 2 736 654 B1**
(45) Veröffentlichungstag und Bekanntmachung des Hinweises auf die Patenterteilung: **06.07.2022**
(21) Anmeldenummer: 12719958.6
(22) Anmeldetag: 03.05.2012
(51) Int. Cl.: B05B 14/43, B05B 16/40, B01D 46/00

(54) **FILTERANLAGE UND VERFAHREN ZUM BETRIEB EINER FILTERANLAGE**
FILTER FACILITY AND METHOD FOR OPERATING A FILTER FACILITY
INSTALLATION DE FILTRATION ET PROCÉDÉ DE COMMANDE D'UNE TELLE INSTALLATION

(30) Priorität: 27.07.2011 DE 102011079951; 29.07.2011 DE 102011052298; 02.11.2011 DE 202011107555 U
(43) Veröffentlichungstag der Anmeldung: 04.06.2014
(73) Patentinhaber: Dürr Systems AG, 74321 Bietigheim-Bissingen (DE)
(72) Erfinder: HOLLER, Sebastian, 70825 Korntal-Münchingen (DE); KIRSCHKE, Cord, 71282 Hemmingen (DE); WIELAND, Dietmar, 71336 Waiblingen (DE); ULLMER, Andreas, 74080 Heilbronn (DE)
(74) Vertreter: DTS Patent- und Rechtsanwälte Schnekenbühl und Partner mbB
(86) Internationale Anmeldenummer: PCT/EP2012/058167
(87) Internationale Veröffentlichungsnummer: WO 2013/013848

(56) Entgegenhaltungen:
- EP-A1- 2 039 436
- WO-A1-2010/069407
- DE-A1- 2 828 130
- DE-A1-102007 041 008
- DE-A1-102009 058 206

## Beschreibung

Die vorliegende Erfindung betrifft eine Filteranlage, welche eine Filtervorrichtung zur Reinigung eines mit Lack-Overspray beladenen Rohgasstroms umfasst, wobei die Filtervorrichtung ein Filterelement umfasst, an welchem Lack-Overspray aus dem mit Lack-Overspray beladenen Rohgasstrom zusammen mit dem Rohgasstrom zugeführtem Filterhilfsmaterial abscheidbar ist. Ferner umfasst die Filtervorrichtung einen Aufnahmebehälter zur Aufnahme eines Systems aus Lack-Overspray und Filterhilfsmaterial und eine Entnahmevorrichtung zur Entnahme von zumindest einem Teil des Systems aus Lack-Overspray und Filterhilfsmaterial aus dem Aufnahmebehälter.

Grundsätzlich kann bei einer solchen Filteranlage vorgesehen sein, dass das System aus Lack-Overspray und Filterhilfsmaterial nach einer gewissen Betriebsdauer der Filtervorrichtung aus dem Aufnahmebehälter entnommen und entsorgt wird und dass dieser Filtervorrichtung für den weiteren Betrieb der Filteranlage frisches, nicht mit Lack-Overspray beladenes Filterhilfsmaterial zugeführt wird.

Lackieranlagen mit einer Filtervorrichtung sind beispielsweise aus der WO 2010/069407 A1 und der DE 28 28 130 A1 bekannt.

Der vorliegenden Erfindung liegt die Aufgabe zugrunde, eine Filteranlage der eingangs genannten Art bereitzustellen, mittels welcher ein materialsparender, effizienter Filterbetrieb durchführbar ist.

Diese Aufgabe wird erfindungsgemäß dadurch gelöst, dass die Filteranlage die Merkmale des unabhängigen Anspruchs 1 umfasst.

Ein System aus Lack-Overspray und Filterhilfsmaterial kann beispielsweise ein Gemisch aus Lack-Overspray-Partikeln und Filterhilfsmaterialpartikeln sein. Insbesondere ist ein System aus Lack-Overspray und Filterhilfsmaterial durch Konglomerate und/oder Agglomerate aus Lack-Overspray-Partikeln, insbesondere Lacktröpfchen, und Filterhilfsmaterialpartikeln, insbesondere Steinmehlkörnchen, gebildet.

Ein System aus Lack-Overspray und Filterhilfsmaterial kann beispielsweise im Wesentlichen ausschließlich aus Agglomeraten und/oder Konglomeraten aus Lack-Overspray-Partikeln und Filterhilfsmaterialpartikeln bestehen.

Ferner kann ein System aus Lack-Overspray und Filterhilfsmaterial durch aufbereitetes Filterhilfsmaterial, insbesondere ein aufbereitetes System aus Lack-Overspray und Filterhilfsmaterial, gebildet sein.

Ferner kann ein System aus Lack-Overspray und Filterhilfsmaterial eine Mischung aus frischem (unverbrauchtem), nicht mit Lack-Overspray beladenem Filterhilfsmaterial, aus Agglomeraten und/oder Konglomeraten aus Lack-Overspray-Partikeln und Filterhilfsmaterialpartikeln und/oder aus aufbereitetem Filterhilfsmaterial sein.

Dadurch, dass die Filteranlage erfindungsgemäß eine Aufbereitungsvorrichtung zur Aufbereitung des Systems aus Lack-Overspray und Filterhilfsmaterial umfasst, ist eine vollständige Entsorgung des Systems aus Lack-Overspray und Filterhilfsmaterial nach einer bereits einmaligen Verwendung des Filterhilfsmaterials in einer Filtervorrichtung vorzugsweise entbehrlich. Vielmehr kann das System aus Lack-Overspray und Filterhilfsmaterial vorzugsweise als aufbereitetes Filterhilfsmaterial erneut einer Filtervorrichtung zugeführt werden. Hierdurch ist ein materialsparender und effizienter Betrieb der Filteranlage möglich.

Das System aus Lack-Overspray und Filterhilfsmaterial sammelt sich insbesondere nach einem Abreinigungsvorgang des Filterelements in dem, vorzugsweise unter dem Filterelement angeordneten, Aufnahmebehälter für Filterhilfsmaterial und/oder für ein System aus Lack-Overspray und Filterhilfsmaterial (auch "Filterhilfsmaterialaufnahmebehälter" genannt).

Die Filteranlage umfasst ine oder vorzugsweise mehrere Filtervorrichtungen und eine oder vorzugsweise mehrere Aufbereitungsvorrichtungen.

Die Filtervorrichtung umfasst ein oder vorzugsweise mehrere Filterelemente, einen oder vorzugsweise mehrere Aufnahmebehälter und eine oder vorzugsweise mehrere Entnahmevorrichtungen.

Als Filterhilfsmaterial kann insbesondere jedes Medium verwendet werden, welches dazu in der Lage ist, einen Flüssigkeitsanteil des Lack-Overspray aufzunehmen.

Insbesondere kommen als Filterhilfsmaterialien beispielsweise Kalk, Steinmehl, insbesondere Kalksteinmehl, Aluminiumsilikate, Aluminiumoxide, Siliziumoxide, Pulverlack oder Ähnliches in Betracht.

Alternativ oder ergänzend hierzu können als Filterhilfsmaterial zur Aufnahme und/oder Bindung des Lack-Overspray auch Partikel mit einer Hohlraumstruktur und relativ zu ihren Außenabmessungen großer innerer Oberfläche verwendet werden, beispielsweise natürliche und/oder synthetische Zeolithe oder andere hohle, beispielsweise kugelförmige, Körper aus Polymeren, Glas oder Aluminiumsilikat und/oder natürliche oder synthetisch erzeugte Fasern. Als Zeolithe werden insbesondere Alumino-Silikate bezeichnet, welche die allgemeine Summenformel Mⁿ⁺_{x/n} [(AlO₂)^{x-} (SiO₂)^{y}] · z H₂O aufweisen (Mⁿ⁺: Metallkation; x/n: stöchiometrischer Faktor, der sich aus der Ladung des Kations und der des Aluminat-Anions ergibt (= "Modul")). Es können beispielsweise Calcium-, Magnesium-, Calcium-Magnesium-, Natrium- und/oder Kalium-Zeolithe verwendet werden. Vorzugsweise werden Mischungen aus zwei oder mehreren dieser Zeolitharten verwendet.

Alternativ oder ergänzend hierzu können als Filterhilfsmaterial zur Aufnahme und/oder Bindung des Lack-Overspray auch chemisch mit dem Overspray reagierende Partikel verwendet werden, beispielsweise chemisch reaktive Partikel mit Amin-, Epoxid-, Carboxyl-, Hydroxyl- oder Isocyanat-Gruppen, chemisch reaktive Partikel aus mit Octylsilan nachbehandeltem Aluminiumoxid oder feste oder flüssige Mono-, Oligo- oder Polymere, Silane, Silanole oder Siloxane.

Das Filterhilfsmaterial besteht vorzugsweise aus einer Vielzahl von FilterhilfsmaterialPartikeln, welche insbesondere einen mittleren Durchmesser im Bereich von ungefähr 10 µm bis ungefähr 100 µm aufweisen.

Das Filterhilfsmaterial ist insbesondere ein fließfähiges, partikelförmiges Material, welches auch als "Precoat"-Material bezeichnet wird.

Das Filterhilfsmaterial dient insbesondere dazu, sich als Sperrschicht an der Oberfläche des Filterelements abzusetzen, um zu verhindern, dass diese Oberfläche durch anhaftende Lack-Overspray-Partikel verklebt. Durch periodisches Abreinigen des Filterelements gelangt das System aus Filterhilfsmaterial und Lack-Overspray von dem Filterelement in den Aufnahmebehälter.

Erfindungsgemäß ist vorgesehen, dass die Aufbereitungsvorrichtung eine thermische Behandlungsvorrichtung umfasst, mittels welcher das System aus Lack-Overspray und Filterhilfsmaterial zur Aufbereitung desselben thermisch behandelbar ist.

Eine thermische Behandlungsvorrichtung kann insbesondere eine Heizvorrichtung sein, mittels welcher das System aus Lack-Overspray und Filterhilfsmaterial aufgeheizt werden kann. Insbesondere ist mittels einer Heizvorrichtung ein Flüssigkeitsanteil in dem System aus Lack-Overspray und Filterhilfsmaterial verdampfbar.

Die thermische Behandlungsvorrichtung ist als eine Verbrennungsvorrichtung ausgebildet. Mittels einer Verbrennungsvorrichtung können insbesondere leicht flüchtige, insbesondere organische, Bestandteile des

Systems aus Lack-Overspray und Filterhilfsmaterial, beispielsweise Lösemittel, verbrannt und somit aus dem System aus Lack-Overspray und Filterhilfsmaterial entfernt werden. Insbesondere kann eine oxidative Verbrennung des Systems aus Lack-Overspray und Filterhilfsmaterial erfolgen.

Günstig kann es ferner sein, wenn eine thermische Behandlungsvorrichtung eine Pyrolisiervorrichtung umfasst, mittels welcher das System aus Lack-Overspray und Filterhilfsmaterial pyrolisierbar ist.

Günstig kann es sein, wenn die Aufbereitungsvorrichtung mehrere thermische Behandlungsvorrichtungen, die vorzugsweise unterschiedliche Funktionen aufweisen, umfasst. Insbesondere kann vorgesehen sein, dass mittels einer als Heizvorrichtung ausgebildeten thermischen Behandlungsvorrichtung Flüssigkeitsbestandteile des Systems aus Lack-Overspray und Filterhilfsmaterial verdampft werden. Mittels einer als Verbrennungsvorrichtung und/oder als Nachverbrennungsvorrichtung ausgebildeten thermischen Behandlungsvorrichtung kann dann beispielsweise eine Verbrennung der brennbaren Bestandteile des Flüssigkeitsanteils erfolgen. Insbesondere können auf diese Weise Lösemittel, welche aus dem System aus Lack-Overspray und Filterhilfsmaterial freigesetzt werden, verbrannt und somit unschädlich gemacht werden.

Vorteilhaft kann es sein, wenn eine thermische Behandlungsvorrichtung als eine Kühlvorrichtung ausgebildet ist. Insbesondere ist mittels einer solchen Kühlvorrichtung das System aus Lack-Overspray und Filterhilfsmaterial unter eine Glasübergangstemperatur herunterkühlbar, so dass der Lack-Overspray vorzugsweise versprödet.

Eine thermische Behandlungsvorrichtung kann ferner als eine Trocknungsvorrichtung ausgebildet sein, mittels welcher dem System aus Lack-Overspray und Filterhilfsmaterial zum Trocknen desselben beispielsweise trockene Luft, welche nicht gesättigt ist und Feuchtigkeit aufnehmen kann, zuführbar ist. Die Luft ist vorzugsweise heiße Luft, welche beispielsweise eine Temperatur von mindestens ungefähr 40 °C, insbesondere mindestens ungefähr 60 °C, aufweist.

Insbesondere kann hierzu Luft verwendet werden, welche aus einer Werkstücktrocknungsvorrichtung zum Trocknen von lackierten Werkstücken stammt.

Als Verbrennungsvorrichtung wird ein Wirbelschichttrockner verwendet.

Die Zuführung des Systems aus Lack-Overspray und Filterhilfsmaterial in die Verbrennungsvorrichtung, die Nachverbrennungsvorrichtung und/oder die Heizvorrichtung kann beispielsweise über eine Förderschnecke und/oder über eine Rüttelrinne erfolgen.

Beispielsweise bei der Verwendung von Wirbelschichttrocknern und Stromtrocknern kann eine Dosierung des Systems aus Lack-Overspray und Filterhilfsmaterial mittels einer pneumatischen Förderung, beispielsweise mittels einer Flugförderung, einer Dichtstromförderung und/oder einer Pfropfenförderung erfolgen.

Vorzugsweise wird die Verbrennungsvorrichtung, die Nachverbrennungsvorrichtung und/oder die Heizvorrichtung elektrisch und/oder mit Gas betrieben.

Bei einer Ausgestaltung der Erfindung ist vorgesehen, dass die Aufbereitungsvorrichtung eine oder mehrere mechanische Behandlungsvorrichtungen umfasst, mittels welchen das System aus Lack-Overspray und Filterhilfsmaterial zur Aufbereitung desselben mechanisch behandelbar ist. Insbesondere kann vorgesehen sein, dass hierdurch Agglomerate aus Lack-Overspray und Filterhilfsmaterial aufgebrochen werden.

Insbesondere kann vorgesehen sein, dass eine mechanische Behandlungsvorrichtung als eine Mahlvorrichtung ausgebildet ist, mittels welcher das System aus Lack-Overspray und Filterhilfsmaterial gemahlen werden kann.

Eine mechanische Behandlungsvorrichtung ist ferner vorzugsweise eine Zerkleinerungsvorrichtung zur Zerkleinerung von Agglomeraten aus Lack-Overspray und Filterhilfsmaterial.

Vorteilhaft kann es sein, wenn die Aufbereitungsvorrichtung eine pneumatische Behandlungsvorrichtung umfasst, mittels welcher das System aus Lack-Overspray und Filterhilfsmaterial zur Aufbereitung desselben mit Luft beaufschlagbar ist.

Eine pneumatische Behandlungsvorrichtung kann beispielsweise eine Druckluftvorrichtung sein, mittels welcher das System aus Lack-Overspray und Filterhilfsmaterial zur Aufbereitung desselben mit Druckluft beaufschlagbar ist.

Ferner kann eine pneumatische Behandlungsvorrichtung eine Aufwirbelvorrichtung sein, mittels welcher das System aus Lack-Overspray und Filterhilfsmaterial aufgewirbelt werden kann. Insbesondere kann mittels einer solchen Aufwirbelvorrichtung in Verbindung mit Prallplatten erreicht werden, das die aufgewirbelten Agglomerate aus Lack-Overspray und Filterhilfsmaterial gegeneinander und gegen die Prallplatten prallen und hierdurch zerkleinert werden.

Ferner ist mittels einer pneumatischen Behandlungsvorrichtung das System aus Lack-Overspray und Filterhilfsmaterial vorzugsweise trockenbar. Insbesondere kann eine Trocknung dadurch erfolgen und/oder beschleunigt werden, dass das System auf Lack-Overspray und Filterhilfsmaterial aufgewirbelt wird.

Mittels der Aufbereitungsvorrichtung ist vorzugsweise eine mechanische und/oder chemische Aufbereitung des Systems aus Lack-Overspray und Filterhilfsmaterial durchführbar.

Die Filteranlage umfasst vorzugsweise eine Speichervorrichtung zur Aufnahme und Speicherung von Filterhilfsmaterial und/oder eines Systems aus Lack-Overspray und Filterhilfsmaterial.

Eine Speichervorrichtung kann beispielsweise als ein Silo, insbesondere als Lagersilo, als Speichersilo und/oder als Mischsilo, ausgebildet sein.

Mittels einer Speichervorrichtung kann insbesondere außerhalb des Aufnahmebehälters eine Aufnahme und Speicherung von Filterhilfsmaterial und/oder eines Systems aus Lack-Overspray und Filterhilfsmaterial erfolgen.

Bei einer Ausgestaltung der Erfindung ist vorgesehen, dass eine Speichervorrichtung eine Zwischenspeichervorrichtung zur Zwischenspeicherung eines aufbereiteten Systems aus Lack-Overspray und Filterhilfsmaterial ist. Vorzugsweise ist der Zwischenspeichervorrichtung das aufbereitete System aus Lack-Overspray und Filterhilfsmaterial aus der Aufbereitungsvorrichtung zuführbar. Ferner kann vorgesehen sein, dass mittels der Zwischenspeichervorrichtung das aufbereitete System aus Lack-Overspray und Filterhilfsmaterial für mindestens eine Filtervorrichtung bereitstellbar ist. Ein Vorteil der Zwischenspeichervorrichtung ist, dass damit die unregelmäßige Entleerung der einzelnen Aufnahmebehälter abgepuffert werden kann und somit eine kontinuierliche Beschickung beispielsweise eines Drehrohrofens mit Hilfsmaterial möglich ist.

Vorteilhaft kann es sein, wenn eine Speichervorrichtung eine Zwischenspeichervorrichtung zur Zwischenspeicherung eines aus dem Aufnahmebehälter entnommenen, der Aufbereitungsvorrichtung zuzuführenden Systems aus Lack-Overspray und Filterhilfsmaterial ist. Hierbei kann vorgesehen sein, dass der Zwischenspeichervorrichtung das System aus Lack-Overspray und Filterhilfsmaterial aus dem Aufnahmebehälter zuführbar ist. Ferner kann vorgesehen sein, dass mittels der Zwischenspeichervorrichtung das System aus Lack-Overspray und Filterhilfsmaterial für die Aufbereitungsvorrichtung bereitstellbar ist.

Das System aus Lack-Overspray und Filterhilfsmaterial, welches der Aufbereitungsvorrichtung zuzuführen ist, wird auch als aufzubereitendes System aus Lack-Overspray und Filterhilfsmaterial bezeichnet.

Bei einer Ausgestaltung der Erfindung ist vorgesehen, dass die Filteranlage eine Steuerungsvorrichtung und/oder eine Regelungsvorrichtung umfasst, mittels welcher ermittelbar ist, ob das der Filtervorrichtung zur Reinigung des Rohgasstroms bereitgestellte Filterhilfsmaterial unbeladenes, frisches Hilfsmaterial oder ein System aus Lack-Overspray und Filterhilfsmaterial ist.

Insbesondere kann mittels einer Steuerungsvorrichtung und/oder einer Regelungsvorrichtung eine Anzahl an Aufbereitungsvorgängen erfasst werden, so dass eine (zu hohe) Anreicherung von Lack-Overspray in dem Filterhilfsmaterial ermittelbar und vorzugsweise vermeidbar ist.

Mit Lack-Overspray beladenes Filterhilfsmaterial ist insbesondere das von mindestens einem Filterelement abgereinigte System aus Lack-Overspray und Filterhilfsmaterial.

Erfindungsgemäß ist vorgesehen, dass die Filteranlage eine Mischvorrichtung umfasst, mittels welcher unbeladenes, frisches Filterhilfsmaterial und ein System aus Lack-Overspray und Filterhilfsmaterial zusammenführbar und mischbar sind.

Insbesondere kann vorgesehen sein, dass die Filteranlage eine Mischvorrichtung umfasst, mittels welcher unbeladenes, frisches Filterhilfsmaterial und ein aufbereitetes System aus Lack-Overspray und Filterhilfsmaterial zusammenführbar und mischbar sind.

Alternativ oder ergänzend hierzu kann vorgesehen sein, dass die Filteranlage mindestens eine Mischvorrichtung umfasst, mittels welcher unbeladenes, frisches Filterhilfsmaterial und ein nicht aufbereitetes System aus Lack-Overspray und Filterhilfsmaterial zusammenführbar und mischbar sind.

Ferner kann vorgesehen sein, dass die Filteranlage, insbesondere mindestens eine Filtervorrichtung, mindestens eine Mischvorrichtung (Durchmischeinrichtung) umfasst, mittels welcher ein System aus Lack-Overspray und Filterhilfsmaterial durchmischbar ist, so dass ein im Wesentlichen homogenes System erhältlich ist, in welchem mit Lack-Overspray beladene Filterhilfsmaterialpartikel und unbeladene Filterhilfsmaterialpartikel im Wesentlichen gleichmäßig verteilt angeordnet sind.

Die Filteranlage umfasst vorzugsweise eine Messvorrichtung zur Messung des Beladungsgrades, das heißt des Anteils von Lack-Overspray an dem System aus Lack-Overspray und Filterhilfsmaterial, beispielsweise in Bezug auf das Gesamtvolumen und/oder die Gesamtmasse des Systems aus Lack-Overspray und Filterhilfsmaterial.

Erfindungsgemäß ist vorgesehen, dass die Filteranlage eine Steuerungsvorrichtung und/oder eine Regelungsvorrichtung umfasst, mittels welcher ein Mischungsverhältnis zum Mischen des unbeladenen frischen Filterhilfsmaterials mit dem System aus Lack-Overspray und Filterhilfsmaterial in Abhängigkeit von dem Beladungsgrad des Filterhilfsmaterials mit Lack-Overspray, steuerbar und/oder regelbar ist.

Die erfindungsgemäße Filteranlage eignet sich insbesondere zur Verwendung in einer Lackieranlage zum Lackieren von Werkstücken, insbesondere von Fahrzeugkarosserien.

Eine Lackieranlage umfasst vorzugsweise mindestens eine Filtervorrichtung zum Abtrennen von Lack-Overspray aus einem Overspraypartikel (Lack-Overspray) enthaltenden Rohgasstrom, wobei die mindestens eine Filtervorrichtung insbesondere Folgendes umfasst:
- eine Einhausung, welche eine Rohgaskammer der Filtervorrichtung begrenzt und in welcher mindestens ein Filterelement der Filtervorrichtung angeordnet ist;
- mindestens einen Einlasskanal zum Einlassen des Rohgasstroms in die Rohgaskammer der Filtervorrichtung; und/oder
- eine (Filterhilfsmaterial-) Einbringeinrichtung zum Einbringen von Filterhilfsmaterial oder eines Systems (Gemisches) aus Lack-Overspray und Filterhilfsmaterial in den Rohgasstrom.

Die Lackieranlage weist vorzugsweise keine Vorrichtung zur Nassabscheidung von Lack-Overspray auf.

Die (Filterhilfsmaterial-) Einbringeinrichtung umfasst vorzugsweise mindestens eine Aufbereitungseinrichtung (Aufbereitungsvorrichtung), insbesondere mindestens eine Behandlungsvorrichtung, und/oder mindestens einen Aufnahmebehälter.

Ferner umfasst die Lackieranlage vorzugsweise
- eine Lackierkabine, in welcher Werkstücke mit Lack lackierbar sind;
- eine (Werkstück-) Fördervorrichtung, mittels welcher die zu lackierenden Werkstücke in einer (Werkstück-) Förderrichtung durch die Lackierkabine hindurch förderbar sind;
- eine Abscheide- und/oder Filteranlage (vereinfachend als "Filteranlage" bezeichnet) zum Reinigen eines die Lackierkabine verlassenden Rohgasstroms, der in der Lackierkabine Lack-Overspray aufgenommen hat, wobei die Filteranlage mindestens eine Filtervorrichtung zum Abtrennen des Lack-Overspray aus dem Rohgasstrom umfasst; und/oder
- mindestens eine Reingasleitung für einen Reingasstrom, welcher durch Reinigung des Rohgasstroms mittels der mindestens einen Filtervorrichtung erhältlich ist.

Mindestens eine Filtervorrichtung ist als regenerierbare Filtervorrichtung ausgebildet.

Unter einer regenerierbaren Filtervorrichtung ist eine Abtrennvorrichtung zum Abtrennen von Verunreinigungen aus einem durch die Lackierkabine geführten Gasstrom, insbesondere zum Abtrennen von Lack-Overspray aus einem Overspraypartikel enthaltenden Gasstrom, zu verstehen, bei welcher abgeschiedene Verunreinigungen abgereinigt werden können, ohne Filterelemente der Filtervorrichtung austauschen zu müssen.

Als eine regenerierbare Filtervorrichtung (Filteranordnung) ist insbesondere auch eine Filtervorrichtung vorgesehen, die eines oder mehrere Trockenfilterelemente und/oder eine oder mehrere Trockenabscheidungsvorrichtungen aufweist, bei denen eine Reinigung eines Gasstromes im Wesentlichen ohne die Zugabe einer Flüssigkeit an den Filterelementen erfolgt. Davon unabhängig können nachfolgende oder vorgelagerte Reinigungsstufen wiederum unter Verwendung von (bei Normalbedingungen) flüssigen Löse- oder Reinigungsmitteln vorgesehen sein.

Unabhängig von der Reinigungsfunktion eines Trockenfilterelements und/oder einer Trockenabscheidungsvorrichtung, welche ohne die Zugabe einer Flüssigkeit erfolgt, kann vorgesehen sein, dass mindestens ein Trockenfilterelement und/oder mindestens eine Trockenabscheidungsvorrichtung zur Reinigung derselben, insbesondere zum Entfernen eines Filterkuchens aus Lack-Overspray und Filterhilfsmaterial, mit einer Flüssigkeit, insbesondere einer Reinigungsflüssigkeit, beaufschlagt werden. Eine Reinigung mindestens eines Trockenfilterelements und/oder mindestens einer Trockenabscheidungsvorrichtung kann somit nass erfolgen, während ein Abscheidebetrieb/Filterbetrieb vorzugsweise trocken erfolgt.

Bei der regenerierbaren Filtervorrichtung ist vorgesehen, dass die Filtervorrichtung mindestens ein Filterelement umfasst, welches im Filterbetrieb mit einer Sperrschicht und/oder einer Schutzschicht versehen ist, welche Filterhilfsmaterial, insbesondere Steinmehl, vorzugsweise Kalksteinmehl, und/oder natürliche und/oder synthetische Zeolithe, umfasst.

Auf diese Weise kann im Filterbetrieb der Filtervorrichtung verhindert werden, dass sich das Filterelement mit Verunreinigungen aus dem der Filtervorrichtung zugeführten Gasstrom zusetzt. Durch eine Abreinigung der Sperrschicht bzw. Schutzschicht von dem Filterelement der Filtervorrichtung kann eine besonders einfache Regeneration des Filterelements erfolgen, welches anschließend durch Aufbringen einer frischen Sperrschicht bzw. einer frischen Schutzschicht erneut verwendbar ist.

Als Lack kommt insbesondere Pulverlack oder Fluidlack in Betracht.

Mit dem Begriff "Fluidlack" wird dabei - im Unterschied zum Begriff "Pulverlack" - ein Lack mit einer fließfähigen Konsistenz, von flüssig bis pastös (beispielsweise im Falle eines PVC-Plastisols), bezeichnet. Der Begriff "Fluidlack" umfasst insbesondere die Begriffe "Flüssiglack" und "Nasslack".

Bei der Verwendung von Fluidlack ist der Lack-Overspray aus der Lackierkabine somit ein Fluidlack-Overspray, bei der Verwendung von Nasslack ein Nasslack-Overspray.

Die Filteranlage kann ferner mindestens eine Sichtungsvorrichtung, beispielsweise einen Steigrohrsichter und/oder einen ZZ-Sichter (Zick-Zack-Sichter), zum Trennen der feinen Bestandteile des Systems aus Lack-Overspray und Filterhilfsmaterial von den gröberen Bestandteilen des Systems aus Lack-Overspray und Filterhilfsmaterial umfassen. Insbesondere können mittels einer solchen Sichtungsvorrichtung Filterhilfsmaterialpartikel, welche nicht mit Lack-Overspray beladen sind (kleinere Partikel), von Agglomeraten aus Lack-Overspray und Filterhilfsmaterial (größere Partikel) getrennt werden.

Eine Sichtungsvorrichtung dient vorzugsweise der Trennung der Grobanteile von den Feinanteilen im, insbesondere zumindest teilweise aufbereiteten, System aus Lack-Overspray und Filterhilfsmaterial.

Ferner kann vorgesehen sein, dass eine Sichtungsvorrichtung als ein Habensichter ausgebildet ist, mittels welchem unbeladene Filterhilfsmaterialpartikel von Agglomeraten aus Lack-Overspray und Filterhilfsmaterial trennbar sind.

Die vorliegende Erfindung betrifft ferner ein Verfahren zum Betrieb einer Filteranlage, insbesondere einer erfindungsgemäßen Filteranlage.

Der vorliegenden Erfindung liegt diesbezüglich die Aufgabe zugrunde, ein Verfahren zum Betrieb einer Filteranlage bereitzustellen, welches mit geringem Materialaufwand effizient durchführbar ist.

Diese Aufgabe wird erfindungsgemäß dadurch gelöst, dass das Verfahren die Merkmale des unabhängigen Anspruchs 9 umfasst.

Das erfindungsgemäße Verfahren weist vorzugsweise die vorstehend im Zusammenhang mit der erfindungsgemäßen Filteranlage beschriebenen Merkmale und/oder Vorteile auf.

Erfindungsgemäss ist vorgesehen, dass das System aus Lack-Overspray und Filterhilfsmaterial zur Aufbereitung desselben thermisch behandelt wird.

Erfindungsgemäß ist vorgesehen, dass das System aus Lack-Overspray und Filterhilfsmaterial zur Aufbereitung desselben getrocknet, gebrannt und/oder verbrannt wird.

Beispielsweise wird das System aus Lack-Overspray und Filterhilfsmaterial durch direkten Kontakt mit einer, beispielsweise elektrischen, Heizvorrichtung und/oder mit einer Brennerflamme und/oder mit heißen Brennerabgasen erhitzt (beheizt). Vorzugsweise wird das System aus Lack-Overspray und Filterhilfsmaterial indirekt erhitzt (beheizt), wobei insbesondere eine Abschottung und/oder ein Wärmetauscher zwischen dem System einerseits und der Heizvorrichtung, einem Heizmedium, einer Brennerflamme und/oder heißen Brennerabgasen andererseits vorgesehen ist. Günstig kann es sein, wenn das System aus Lack-Overspray und Filterhilfsmaterial zur Aufbereitung desselben mit Druckluft beaufschlagt wird. Auf diese Weise kann einerseits eine Trocknung des Systems aus Lack-Overspray und Filterhilfsmaterial erzielt werden. Ferner kann auf diese Weise das System aus Lack-Overspray und Filterhilfsmaterial aufgewirbelt werden. Insbesondere dann, wenn das System aus Lack-Overspray und Filterhilfsmaterial mittels einer Druckluftvorrichtung zu Prallplatten hin beschleunigt wird, kann eine Aufwirbelung und zugleich eine Zerkleinerung von Agglomeraten erzielt werden.

Günstig kann es sein, wenn ein Aufnahmebehälter mit mindestens einer pneumatischen Behandlungsvorrichtung versehen ist. Insbesondere kann vorgesehen sein, dass die pneumatische Behandlungsvorrichtung mindestens eine Luftdüse, beispielsweise eine Laval-Düse, umfasst, mittels welcher Luft mit Überdruck (über dem Normaldruck von 1013 mbar), beispielsweise zwischen ungefähr 0,1 bar und ungefähr 7 bar Überdruck, vorzugsweise mit ungefähr 2 bar Überdruck, in das System aus Lack-Overspray und Filterhilfsmaterial einbringbar ist.

Vorzugsweise wird das System aus Lack-Overspray und Filterhilfsmaterial mittels der Druckluft aufgewirbelt und aufgrund von Stößen der Agglomerate untereinander und/oder mit Wänden des Aufnahmebehälters und/oder mit Prallplatten zerkleinert.

Die pneumatische Behandlungsvorrichtung kann einen Luftverdichter umfassen. Alternativ oder ergänzend hierzu kann die pneumatische Behandlungsvorrichtung mit Druckluft betrieben werden.

Die Luft für die pneumatische Behandlungsvorrichtung ist insbesondere Frischluft, welche aus einer Frischluftzuführvorrichtung einer Lackieranlage, insbesondere aus einer Zuführung von Frischluft für einen Lackierprozess der Lackieranlage, abgezweigt wird und/oder, insbesondere gefilterte, Umluft oder Hallenluft, die vorzugsweise verdichtet wird.

Alternativ oder ergänzend hierzu kann vorgesehen sein, dass, insbesondere gereinigte, Abluft aus der Lackieranlage für die pneumatische Behandlungsvorrichtung verwendet wird.

Eine pneumatische Behandlungsvorrichtung kann ferner ein Wirbelbett umfassen, welches beispielsweise in dem Aufnahmebehälter angeordnet ist. Ein Wirbelbett umfasst vorzugsweise eine oder mehrere Düsen, mittels welchen die Filterhilfsmaterialpartikel oder Agglomerate aus Lack-Overspray und Filterhilfsmaterial aufeinander und/oder gegen Prallplatten beschleunigbar sind, um ein Aufbrechen der Agglomerate aus Lack-Overspray und Filterhilfsmaterial zu bewirken.

Mindestens eine Düse mindestens einer pneumatischen Behandlungsvorrichtung ist vorzugsweise so angeordnet, dass ein mittels der Düse erzeugter Luftstrahl im Wesentlichen horizontal in das System aus Lack-Overspray und Filterhilfsmaterial gerichtet ist. Alternativ oder ergänzend hierzu kann vorgesehen sein, dass mindestens eine Düse mindestens einer pneumatischen Behandlungsvorrichtung so angeordnet ist, dass mindestens ein Luftstrahl vertikal oder in einem (schrägen) Winkel auf das System aus Lack-Overspray und Filterhilfsmaterial gerichtet ist. Insbesondere kann vorgesehen sein, dass ein Luftstrahl das System aus Lack-Overspray und Filterhilfsmaterial vertikal von unten nach oben, vertikal von oben nach unten oder diagonal durchströmt.

Vorteilhaft kann es sein, wenn mindestens eine Strömungsschikane vorgesehen ist, mittels welcher das System aus Lack-Overspray und Filterhilfsmaterial zur Verlängerung eines pneumatischen Zerkleinerungsvorganges (Mahlvorganges) im Aufnahmebehälter gehalten werden kann, bevor es dem Rohgasstrom und schließlich den Filterelementen zugeführt wird.

Ferner kann vorgesehen sein, dass mindestens eine pneumatische Behandlungsvorrichtung mindestens eine Düse umfasst, welche so angeordnet ist, dass ein Luftstrahl senkrecht oder in einem (schrägen) Winkel auf einen Teil einer Mischeinrichtung und/oder einer (sonstigen) mechanischen Behandlungsvorrichtung gerichtet ist, so dass die Mischeinrichtung und/oder die mechanische Behandlungsvorrichtung eine oder mehrere Prallplatten für Agglomerate aus Lack-Overspray und Filterhilfsmaterial bilden.

Insbesondere ist die Mischvorrichtung und/oder die (sonstige) mechanische Behandlungsvorrichtung so ausgebildet, dass das System aus Lack-Overspray und Filterhilfsmaterial in Richtung mindestens einer Düse mindestens einer pneumatischen Behandlungsvorrichtung gefördert wird, um das System aus Lack-Overspray und Filterhilfsmaterial in einen durch die mindestens eine Düse erzeugten Luftstrom einbringen zu können.

Der Vorgang des Aufbrechens von Agglomeraten aus Lack-Overspray und Filterhilfsmaterial, beispielsweise ein mechanischer oder pneumatischer Mahlvorgang, kann vorzugsweise kontinuierlich oder getaktet erfolgen.

Bei einer Ausgestaltung der Erfindung ist vorgesehen, dass dem System aus Lack-Overspray und Filterhilfsmaterial zur Aufbereitung desselben mindestens ein Aufbereitungshilfsstoff zugeführt wird.

Insbesondere kann dem System aus Lack-Overspray und Filterhilfsmaterial zur Aufbereitung desselben mindestens ein Trocknungsmittel, beispielsweise Silikagel oder Zeolith, und/oder mindestens ein Rieselhilfsstoff, beispielsweise Sand oder Kalksteinmehl, zugeführt werden. Insbesondere bei der Verwendung von Kalksteinmehl als Rieselhilfsstoff kann vorgesehen sein, dass eine durchschnittliche Korngröße des als Rieselhilfsstoff verwendeten Kalksteinmehls größer gewählt wird als eine durchschnittliche Korngröße des Filterhilfsmaterials, welches beispielsweise ebenfalls aus Kalksteinmehl gebildet ist.

Vorteilhaft kann es sein, wenn mindestens zwei Verfahrensschritte, insbesondere mindestens zwei voneinander verschiedene Verfahrensschritte, zur Aufbereitung des Systems aus Lack-Overspray und Filterhilfsmaterial durchgeführt werden.

Günstig kann es sein, wenn mindestens zwei Verfahrensschritte zur Aufbereitung des Systems aus Lack-Overspray und Filterhilfsmaterial zeitlich nacheinander durchgeführt werden.

Alternativ oder ergänzend hierzu kann vorgesehen sein, dass mindestens zwei Verfahrensschritte zur Aufbereitung des Systems aus Lack-Overspray und Filterhilfsmaterial im Wesentlichen zeitgleich und/oder zeitlich überlappend durchgeführt werden.

Zumindest ein Teil des Systems aus Lack-Overspray und Filterhilfsmaterial wird vorzugsweise aus dem Aufnahmebehälter entnommen und außerhalb des Aufnahmebehälters aufbereitet.

Insbesondere wird der entnommene und aufbereitete Teil des Systems aus Lack-Overspray und Filterhilfsmaterial erneut als Filterhilfsmaterial der Filtervorrichtung zugeführt, insbesondere erneut in den Rohgasstrom eingebracht.

Alternativ oder ergänzend hierzu kann vorgesehen sein, dass zumindest ein Teil des Systems aus Lack-Overspray und Filterhilfsmaterial in dem Aufnahmebehälter aufbereitet wird. Eine Entnahme und eine erneute Zuführung des Systems aus Lack-Overspray und Filterhilfsmaterial ist dann vorzugsweise entbehrlich oder kann zumindest hinausgezögert werden.

Grundsätzlich kann vorgesehen sein, dass zumindest ein Teil des Systems aus Lack-Overspray und Filterhilfsmaterial nach dem Entfernen aus dem Aufnahmebehälter, nach der Aufbereitung mittels der Aufbereitungsvorrichtung und/oder vor der Zuführung zu der mindestens einen Filtervorrichtung mittels einer Speichervorrichtung, insbesondere mittels einer Zwischenspeichervorrichtung, gespeichert, insbesondere zwischengespeichert, wird. Auf diese Weise ist eine große Menge an Filterhilfsmaterial, insbesondere an aufbereitetem Filterhilfsmaterial, stets verfügbar.

Alternativ oder ergänzend hierzu kann vorgesehen sein, dass zumindest ein Teil des Systems aus Lack-Overspray und Filterhilfsmaterial aus dem Aufnahmebehälter entfernt, aufbereitet und dem Aufnahmebehälter wieder zugeführt wird, während in der Filtervorrichtung kein Filterbetrieb durchgeführt wird, beispielsweise während eines Reinigungsbetriebs der Filtervorrichtung. Eine externe Speicherung des Systems aus Lack-Overspray und Filterhilfsmaterial ist dann vorzugsweise entbehrlich.

Vorzugsweise erfolgt ein Austausch des Systems aus Lack-Overspray und Filterhilfsmaterial in dem Aufnahmebehälter während des Normalbetriebs der Filteranlage.

Insbesondere kann hierbei auf eine Zwischenspeichervorrichtung verzichtet werden, wenn innerhalb einer Zeit von beispielsweise ungefähr zwei bis ungefähr drei Minuten zumindest ein Teil des Systems aus Lack-Overspray und Filterhilfsmaterial aus dem Aufnahmebehälter entfernt und der Aufbereitungsvorrichtung zugeführt wird. Vorzugsweise wird innerhalb dieser Zeit ferner die Aufbereitung durchgeführt und das aufbereitete System aus Lack-Overspray und Filterhilfsmaterial sofort demselben Aufnahmebehälter wieder zugeführt. In der Lackieranlage kann dabei vorzugsweise ohne Behinderung weiter lackiert werden, wobei die kurze Zeit ohne oder mit lediglich geringer Menge an Filterhilfsmaterial vom Prozess selbst abgefangen werden kann. Insbesondere kann innerhalb dieser kurzen Zeitspanne noch immer eine Reinigung des mit Lack-Overspray beladenen Rohgasstroms an den Filterelementen erfolgen, da diese trotz einer Abreinigung derselben vorzugsweise noch immer eine dünne Schicht aus Filterhilfsmaterial aufweisen.

Das erfindungsgemäße Verfahren zum Betrieb einer Filteranlage eignet sich insbesondere zur Durchführung in einem Verfahren zum Betrieb einer Lackieranlage.

Das Verfahren zum Betrieb einer Lackieranlage umfasst vorzugsweise folgende Verfahrensschritte:
- Fördern von Werkstücken in einer (Werkstück-) Förderrichtung durch die Lackierkabine mittels einer (Werkstück-) Fördervorrichtung und Lackieren der Werkstücke in der Lackierkabine;
- Zuführen eines Rohgasstroms aus der Lackierkabine der Lackieranlage, welcher Lack-Overspray in der Lackierkabine aufgenommen hat, zu einer Filteranlage, insbesondere einer erfindungsgemäßen Filteranlage;
- Abtrennen von Lack-Overspray aus dem mit Overspraypartikeln beladenen Rohgasstrom mittels mindestens einer Filtervorrichtung der Filteranlage, so dass ein Reingasstrom erhalten wird, wobei mittels mindestens einer (Filterhilfsmaterial-) Einbringeinrichtung, insbesondere mittels einer Behandlungsvorrichtung zum mechanischen Behandeln von Filterhilfsmaterial und/oder eines Systems aus Filterhilfsmaterial und Overspraypartikeln (Lack-Overspray), Filterhilfsmaterial und/oder ein System aus Lack-Overspray und Filterhilfsmaterial aufgelockert wird.

Das Verfahren zum Betrieb einer Lackieranlage weist vorzugsweise die vorstehend im Zusammenhang mit der Filteranlage, der Lackieranlage und/oder dem Verfahren zum Betrieb einer Filteranlage beschriebenen Merkmale und/oder Vorteile auf.

Ferner können die Filteranlage, die Lackieranlage, das Verfahren zum Betrieb einer Filteranlage und/oder das Verfahren zum Betrieb einer Lackieranlage die nachfolgend beschriebenen Merkmale und/oder Vorteile aufweisen:
Vorzugsweise wird beim Entleeren einer Filtervorrichtung das System aus Lack-Overspray und Filterhilfsmaterial nicht in einer Speichervorrichtung (Silo) zur Endverwertung gelagert, sondern mittels einer geeigneten Aufbereitungsvorrichtung, insbesondere einer Mahlvorrichtung (Mühle), wieder auf eine mittlere Korngröße gemahlen, die zumindest näherungsweise der mittleren Korngröße von unbeladenem, frischem Filterhilfsmaterial entspricht.

Vorzugsweise sind mindestens zwei Speichervorrichtungen (Silos) vorgesehen, zwischen welchen (bezüglich einer Förderrichtung des Systems aus Lack-Overspray und Filterhilfsmaterial) mindestens eine Aufbereitungsvorrichtung angeordnet ist. Mittels mindestens einer Speichervorrichtung kann insbesondere ein hoher Bedarf an Filterhilfsmaterial in Spitzenzeiten abgepuffert werden. Ferner können hierdurch längere Aufbereitungszeiten, beispielsweise Mahlzeiten, kompensiert werden, so dass eine Gesamtzeit für die Entnahme von zumindest einem Teil des Systems aus Lack-Overspray und Filterhilfsmaterial aus dem Aufnahmebehälter bis zur erneuten Zuführung von frischem oder aufbereitetem Filterhilfsmaterial zu der Filtervorrichtung im Wesentlichen konstant ist oder zumindest eine vorgegebene Dauer nicht überschritten wird.

Die Filteranlage umfasst vorzugsweise mindestens eine (Filterhilfsmaterial-) Fördereinrichtung, mittels welcher Filterhilfsmaterial und/oder das System aus Lack-Overspray und Filterhilfsmaterial zwischen den einzelnen Bestandteilen der Filteranlage förderbar ist. Insbesondere ist mittels der Fördervorrichtung Filterhilfsmaterial und/oder ein System aus Lack-Overspray und Filterhilfsmaterial von mindestens einer Speichervorrichtung zu mindestens einer Filtervorrichtung, von mindestens einer Filtervorrichtung zu der Aufbereitungsvorrichtung und/oder umgekehrt förderbar.

Mittels einer Steuerungsvorrichtung und/oder einer Regelungsvorrichtung ist vorzugsweise überwachbar, ob einer Filtervorrichtung frisches Filterhilfsmaterial oder bereits einfach oder mehrfach gebrauchtes und aufbereitetes Filterhilfsmaterial zugeführt wurde. Hierzu können insbesondere elektronische Merker verwendet werden.

Insbesondere bei der mehrfachen Aufbereitung des Systems aus Lack-Overspray und Filterhilfsmaterial besteht die Gefahr, dass sich ein Anteil an organischen Bestandteilen, insbesondere Lösemitteln, in dem System aus Lack-Overspray und Filterhilfsmaterial aufkonzentriert. Das System aus Lack-Overspray und Filterhilfsmaterial kann hierdurch brennbar oder (staub-) explosiv werden. Die Anzahl an Aufbereitungsvorgängen und/oder die Rückführung zu der mindestens einen Filtervorrichtung wird daher vorzugsweise überwacht, so dass eine vorgegebene Grenzkonzentration an gefährlichen Stoffen nicht überschritten wird.

Die Gefahr einer Anreicherung von brennbaren oder explosiven Bestandteilen in dem System aus Lack-Overspray und Filterhilfsmaterial kann insbesondere dadurch reduziert werden, dass eine Aufbereitung des Systems aus Lack-Overspray und Filterhilfsmaterial mittels einer thermischen Aufbereitungsvorrichtung erfolgt.

In Abhängigkeit von einem gewählten Temperaturbereich bei der thermischen Aufbereitung kann eine unterschiedliche Aufbereitung des Systems aus Lack-Overspray und Filterhilfsmaterial erfolgen. So kann beispielsweise Lösemittel bei einer Temperatur von höchstens ungefähr 100 °C aus dem System einfach abgedunstet werden. Dies kann insbesondere in einer mechanischen Behandlungsvorrichtung, beispielsweise in einer Mahlvorrichtung, erfolgen, indem die gesamte Mahlvorrichtung erwärmt wird und/oder indem der Mahlvorrichtung erwärmte Luft zugeführt wird. Insbesondere kann vorgesehen sein, dass die Erwärmung der Mahlvorrichtung durch Reibung in der Mahlvorrichtung bei der Aufbereitung des Systems aus Lack-Overspray und Filterhilfsmaterial erfolgt, so dass keine zusätzliche Wärmezufuhr notwendig ist, um das System aus Lack-Overspray und Filterhilfsmaterial auf die zum Abdunsten von Lösemitteln notwendige Temperatur zu erwärmen. Zur Erzielung einer gewünschten Temperatur kann eine entsprechende Mahlzeit eingestellt werden. Ferner kann durch die Einstellung der Mahlzeit ein Mahlgrad eingestellt werden, wobei eine längere Mahlzeit zu einer kleineren Korngröße führt (bis zur konstruktionsbedingten Untergrenze des Mahlwerkzeugs).

Vorzugsweise in einem Temperaturbereich zwischen ungefähr 100 °C und ungefähr 180 °C kann ein Lackanteil in dem System aus Lack-Overspray und Filterhilfsmaterial aushärten. Die hierzu vorzugsweise zuzuführende Luft kann insbesondere aus anderen Anlagenteilen der Filteranlage oder der Lackieranlage stammen. So kann beispielsweise Abluft aus einem Trockner (Werkstücktrocknungsvorrichtung) für lackierte Werkstücke verwendet werden. Die Erwärmung des Systems aus Lack-Overspray und Filterhilfsmaterial auf die zum Aushärten des Lackanteils notwendige Temperatur erfolgt vorzugsweise in einem Zwischenschritt vor der mechanischen Behandlung mittels der mechanischen Behandlungsvorrichtung, insbesondere vor dem Mahlen mittels der Mahlvorrichtung.

In einem Temperaturbereich oberhalb von ungefähr 400 °C kann eine thermische Aufbereitung des Systems aus Lack-Overspray und Filterhilfsmaterial dadurch erfolgen, dass ein Organikanteil in dem System aus Lack-Overspray und Filterhilfsmaterial verbrannt wird. Insbesondere kann hierzu ein Drehrohrofen oder Ähnliches vorgesehen sein, welchem das System aus Lack-Overspray und Filterhilfsmaterial zuführbar ist.

Ergänzend kann vorgesehen sein, dass das System aus Lack-Overspray und Filterhilfsmaterial mittels einer als Kühlvorrichtung ausgebildeten thermischen Behandlungsvorrichtung gekühlt wird. Insbesondere kann mittels einer solchen Kühlvorrichtung eine Kühlung des (zuvor erhitzten) Systems aus Lack-Overspray und Filterhilfsmaterial auf die für den Betrieb der Mahlvorrichtung notwendige (optimale) Temperatur erfolgen.

Bei einer Ausgestaltung der Erfindung ist vorgesehen, dass eine mechanische Behandlungsvorrichtung als eine Zuführvorrichtung zur Zuführung des Systems aus Lack-Overspray und Filterhilfsmaterial zu einer Verbrennungsvorrichtung ausgebildet ist, so dass bei der Zuführung des Systems aus Lack-Overspray und Filterhilfsmaterial zu der Verbrennungsvorrichtung eine mechanische Behandlung, beispielsweise ein Aufmahlvorgang, durchführbar ist. Günstig kann es sein, wenn die für den Betrieb eines Drehrohrofens notwendige Luft die Abluft eines Trockners (Werkstücktrocknungsvorrichtung) zum Trocknen von lackierten Werkstücken ist, welche zum Erreichen der für den Betrieb des Drehrohrofens notwendigen Temperatur aufgeheizt wird. Die Abluft aus dem Drehrohrofen wird vorzugsweise zusammen mit den Verbrennungsprodukten als (Teil-) Luftstrom einer thermischen Nachverbrennungsvorrichtung der Lackieranlage zugeführt.

Die Abluft des Drehrohrofens ist bei der im Prozess möglichen Lackbeladung des Filterhilfsmaterials vorzugsweise nicht heißer, als es für die thermische Nachverbrennung erforderlich ist. Aber zum Einen ist der Teilluftstrom heißer als der Zuluftstrom in die thermische Nachverbrennung, so dass dadurch Brennstoff eingespart werden kann. Zum Anderen gelingt dadurch eine Brennstoffeinsparung, dass der Drehrohrofen - in gewissen Grenzen - autotherm betrieben werden kann, so dass durch die freiwerdende Verbrennungsenergie nicht mehr so stark nachgeheizt werden muss, um den Drehrohrofen auf Temperatur zu halten.

Vorteilhaft kann es sein, zusätzlich zu kühlen, so dass die Umwandlung von im Filterhilfsmaterial enthaltenem Calciumcarbonat (CaCo₃) in Calciumoxid (CaO) verhindert wird.

Alternativ oder ergänzend hierzu kann vorgesehen sein, dass zum Aufheizen des Drehrohrofens ein Teilluftstrom der Trocknerabluft nach Durchlaufen der thermischen Nachverbrennung verwendet wird. Die Abluft des Drehrohrofens wird dann vorzugsweise als Teilluftstrom wieder der thermischen Nachverbrennung zugeführt.

Eine als Drehrohrofen ausgebildete Verbrennungsvorrichtung kann beispielsweise im Gegenstromprinzip betrieben werden. Hierzu wird vorzugsweise heiße Prozessluft an derjenigen Seite in einen Innenraum des Drehrohrofens eingebracht, an welcher thermisch behandeltes System aus Lack-Overspray und Filterhilfsmaterial, insbesondere aufbereitetes Steinmehl, aus dem Innenraum des Drehrohrofens entnommen wird. Das aufzubereitende System aus Lack-Overspray und Filterhilfsmaterial wird entsprechend auf einer dieser Seite gegenüberliegenden Seite des Drehrohrofens in den Innenraum des Drehrohrofens eingebracht. Ein solcher Drehrohrofen kann den Vorteil bieten, dass das System aus Lack-Overspray und Filterhilfsmaterial beim Einbringen desselben in den Innenraum des Drehrohrofens direkt mit dem heißen Prozessgas, das heißt mit dem im Drehrohrofen erhitzten Prozessgas, in Kontakt kommt. Der Drehrohrofen kann folglich vorzugsweise kürzer ausgestaltet werden.

Ergänzend kann vorgesehen sein, dass eine Verbrennungsvorrichtung als ein Drehrohrofen ausgebildet ist, welcher in einem Gleichstromprinzip betrieben wird. Die Prozessluft und das System aus Lack-Overspray und Filterhilfsmaterial werden hierbei von derselben Seite in den Innenraum des Drehrohrofens eingebracht. Der Drehrohrofen kann hierbei eine größere Länge aufweisen. Vorzugsweise können sich bildende Kondensate länger im heißen Prozessgas gehalten werden, so dass die Wahrscheinlichkeit erhöht wird, dass diese Kondensate auch verbrannt werden. Die Menge an sich bildenden teerartigen Rückständen kann hierdurch vorzugsweise verringert werden.

Vorteilhaft kann es sein, wenn ein Drehrohrofen mindestens eine Heizzone, vorzugsweise zwei- oder mehr Heizzonen, insbesondere vier Heizzonen, umfasst. In unterschiedlichen Heizzonen herrschen vorzugsweise unterschiedliche Temperaturen. So kann beispielsweise vorgesehen sein, dass in einer ersten Heizzone eine Temperatur niedriger gehalten wird, als in mindestens einer darauffolgenden weiteren Heizzone, um zunächst flüchtige Bestandteile auszutreiben.

Diese flüchtigen Bestandteile sind vorzugsweise leicht vollständig zu Kohlenstoffdioxid zu verbrennen.

Es kann vorgesehen sein, dass das System aus Lack-Overspray und Filterhilfsmaterial, insbesondere das aufbereitete System aus Lack-Overspray und Filterhilfsmaterial, beispielsweise aufbereitetes Steinmehl, am Ende des Drehrohrofens aus demselben entnommen wird.

Vorteilhaft kann es jedoch sein, wenn das System aus Lack-Overspray und Filterhilfsmaterial, insbesondere das aufbereitete System aus Lack-Overspray und Filterhilfsmaterial, beispielsweise das aufbereitete Steinmehl, zwischen zwei Heizzonen aus dem Drehrohrofen entnommen, insbesondere ausgeschleust, wird. Hierzu kann beispielsweise eine Entnahmevorrichtung vorgesehen sein.

Das Prozessgas verbleibt vorzugsweise in dem Drehrohrofen und kann in den weiteren Heizzonen möglichst vollständig verbrannt werden. Ein Heizen von Rohrleitungen bis zum endgültigen Verbrennen der verdunsteten und/oder teilverbrannten Organika kann hierdurch vorzugsweise vermieden werden.

Durch ein Ausschleusen des Systems aus Lack-Overspray und Filterhilfsmaterial aus dem Drehrohrofen kann eine Trennung zwischen Prozessabgasen und aufbereitetem System aus Lack-Overspray und Filterhilfsmaterial optimiert werden.

Es kann vorgesehen sein, dass mindestens eine Heizzone, welche bezüglich einer Förderrichtung des Systems aus Lack-Overspray und Filterhilfsmaterial stromabwärts einer Entnahmevorrichtung zum Ausschleusen des aufbereiteten Systems aus Lack-Overspray und Filterhilfsmaterial angeordnet ist, eine höhere Temperatur aufweist als mindestens eine vor der Entnahmevorrichtung angeordnete Heizzone. Hierdurch kann abschnittsweise eine höhere Temperatur im Drehrohrofen eingestellt werden, ohne dass zu befürchten ist, dass das Filterhilfsmaterial selbst chemisch umgesetzt wird. Beispielsweise kann eine Temperatur im Drehrohrofen abschnittsweise auf ungefähr 700°C erhöht werden. Eine zusätzliche thermische Nachverbrennung ist dann vorzugsweise entbehrlich.

Die Temperatur im Drehrohrofen wird vorzugsweise so gewählt, dass das Filterhilfsmaterial thermisch nicht beeinträchtigt wird, jedoch die organischen Bestandteile des Systems aus Lack-Overspray und Filterhilfsmaterial vorzugsweise vollständig verbrannt werden. In Abhängigkeit von dem verwendeten Filterhilfsmaterial, beispielsweise Calciumcarbonat (CaCO₃), Zeolithe oder Aluminiumoxid (Al₂O₃), wird eine Temperatur im Innenraum des Drehrohrofens hierzu entsprechend angepasst.

Ein Lackanteil in dem System aus Lack-Overspray und Filterhilfsmaterial wird vorzugsweise durch Kühlen auf eine Temperatur unter einer Glasübergangstemperatur des Lack-Overspray gebracht, so dass der Lackanteil versprödet und einfacher mahlbar wird. Die Kühlung des Systems aus Lack-Overspray und Filterhilfsmaterial kann hierzu vorzugsweise vor dem Einbringen des Systems aus Lack-Overspray und Filterhilfsmaterial in eine mechanische Behandlungsvorrichtung, insbesondere in eine Mahlvorrichtung, erfolgen. Alternativ oder ergänzend hierzu kann vorgesehen sein, dass das System aus Lack-Overspray und Filterhilfsmaterial in der mechanischen Behandlungsvorrichtung, insbesondere in der Mahlvorrichtung, auf die Temperatur unterhalb der Glasübergangstemperatur des Lacks heruntergekühlt wird.

Günstig kann es sein, wenn das System aus Lack-Overspray und Filterhilfsmaterial einem Pyrolyseverfahren unterzogen wird. Hierdurch können Bindemittelanteile in dem System aus Lack-Overspray und Filterhilfsmaterial entfernt und/oder umgewandelt werden, so dass vorzugsweise das reine Filterhilfsmaterial übrig bleibt, welches dann besonders bevorzugt in seiner ursprünglichen mittleren Korngröße vorliegt.

Bei einer Ausgestaltung der Erfindung kann vorgesehen sein, dass mehrere Mahlschritte nacheinander durchgeführt werden. So kann beispielsweise vorgesehen sein, dass eine bestimmte Menge von Filterhilfsmaterial zunächst der Filtervorrichtung zugeführt, dort mit Lack-Overspray beaufschlagt, dann aufbereitet, insbesondere gemahlen, dann erneut der Filtervorrichtung zugeführt, dort mit weiterem Lack-Overspray beaufschlagt und schließlich erneut gemahlen wird, etc. Vorzugsweise wird das Filterhilfsmaterial solange verwendet, bis es einen vorgegebenen Lackanteil (Lackinhalt) und/oder Energieinhalt aufweist. In einem anschließenden Schritt wird vorzugsweise ein Pyrolysevorgang durchgeführt. Der Pyrolysevorgang kann hierdurch mit einer geringen Menge an zusätzlich zuzuführender Energie durchgeführt werden. Die in der mindestens einen Filtervorrichtung verwendete und zu pyrolysierende Menge an Filterhilfsmaterial wird hierdurch vorzugsweise reduziert. Gegebenenfalls kann nach der Durchführung des Pyrolysevorgangs noch ein zusätzlicher mechanischer Aufbereitungsvorgang, beispielsweise ein Mahlvorgang mittels einer Mahlvorrichtung, durchgeführt werden.

Vorzugsweise wird die Abluft aus einer thermischen Aufbereitungsvorrichtung einer Abluftreinigungsvorrichtung der Filteranlage oder der Lackieranlage zugeführt.

Insbesondere dann, wenn in der Filtervorrichtung vorhandenes Filterhilfsmaterial in dem Aufnahmebehälter mittels eines Rührwerks oder eines Paddelmischers aufgelockert wird, kann vorgesehen sein, dass Elemente zum Aufmahlen des Filterhilfsmaterials in das Rührwerk bzw. den Paddelmischer integriert werden. So können beispielsweise Mahlscheiben auf eine Welle des Rührwerks bzw. des Paddelmischers montiert oder eine Kugelmühle in der Welle integriert werden. Ferner kann vorgesehen sein, dass zumindest ein Teil der Welle des Rührwerks oder des Paddelmischers als Stiftmühle ausgebildet ist.

Ein Mischen von unbeladenem Filterhilfsmaterial und mit Lack-Overspray beladenem Filterhilfsmaterial erfolgt vorzugsweise in einer Speichervorrichtung (Silo, insbesondere Mischsilo, welches eine Mischvorrichtung umfasst, beispielsweise mit Mischwerkzeugen versehen ist) und/oder mittels mindestens zwei Dosierorganen, die, beispielsweise gesteuert oder geregelt, unbeladenes und beladenes Filterhilfsmaterial in einem (vorgegebenen) Verhältnis zusammenführen und mischen.

Eine mechanische Behandlungsvorrichtung kann beispielsweise Mahlkugeln umfassen, welche mittels eines Rührwerks, beispielsweise in einem Aufnahmebehälter, in Bewegung versetzbar sind. Die Bewegung der Mahlkugeln kann dann zu einem Aufbrechen von Agglomeraten aus Lack-Overspray und Filterhilfsmaterial führen, wobei bereits bei sehr niedriger Drehzahl ein zuverlässiges Zermahlen der Agglomerate gewährleistet werden kann, da die Verweilzeit des Filterhilfsmaterials im Aufnahmebehälter sehr lang ist (mehrere Stunden bis mehrere Tage). Das Filterhilfsmaterial wird hierdurch vorzugsweise im Filterbetrieb der Filtervorrichtung permanent aufgemahlen und somit auch ohne eine Entnahme und eine externe Aufbereitung so fein gehalten, dass ständig frischer Lack-Overspray aufnehmbar ist, idealerweise bis zur physikalischen Aufnahmegrenze (Literaturwert für die Feuchteaufnahme: ca. 27% w/w (prozentualer Masseanteil des aufgenommenen Stoffes bezogen auf die Gesamtmasse des unbeladenen Filterhilfsmaterials)). Mittels eines Gitters an einer Entnahmeöffnung (Absaugstutzen) des Aufnahmebehälters kann verhindert werden, dass die Mahlkugeln versehentlich aus dem Aufnahmebehälter entfernt werden, wenn das System aus Filterhilfsmaterial und Lack-Overspray entfernt wird.

Vorzugsweise ermöglicht die Aufbereitungsvorrichtung, insbesondere mindestens eine mechanische Behandlungsvorrichtung der Aufbereitungsvorrichtung, die Reduktion der mittleren Korngröße des Systems aus Lack-Overspray und Filterhilfsmaterial auf einen Wert unter ungefähr 100 µm, vorzugsweise unter ungefähr 50 µm, insbesondere unter ungefähr 30 µm, beispielsweise unter ungefähr 10 µm.

Weitere Merkmale und/oder Vorteile sind Gegenstand der nachfolgenden Beschreibung und der zeichnerischen Darstellung von Ausführungsbeispielen.

In den Zeichnungen zeigen:
- Fig. 1: einen schematischen vertikalen Querschnitt durch eine Lackieranlage zum Lackieren von Werkstücken;
- Fig. 2: eine schematische Darstellung einer ersten Ausführungsform einer Filteranlage der Lackieranlage aus Fig. 1, wobei die Filteranlage eine Aufbereitungsvorrichtung zur Aufbereitung eines Filterhilfsmaterials umfasst, welche als eine Mahlvorrichtung ausgebildet ist;
- Fig. 3: eine der Fig. 2 entsprechende schematische Darstellung einer zweiten Ausführungsform einer Filteranlage, bei welcher zwei Zwischenspeichervorrichtungen zur Zwischenspeicherung von Filterhilfsmaterial vorgesehen sind;
- Fig. 4: eine der Fig. 2 entsprechende schematische Darstellung einer dritten Ausführungsform einer Filteranlage, bei welcher eine Mischvorrichtung zum Mischen von frischem Filterhilfsmaterial mit mit Lack-Overspray beladenem Filterhilfsmaterial vorgesehen ist;
- Fig. 5: eine der Fig. 2 entsprechende schematische Darstellung einer vierten Ausführungsform einer Filteranlage, bei welcher die Aufbereitungsvorrichtung eine thermische Behandlungsvorrichtung zum Erhitzen von aufzubereitetem Filterhilfsmaterial umfasst;
- Fig. 6: eine der Fig. 2 entsprechende schematische Darstellung einer fünften Ausführungsform einer Filteranlage, bei welcher dem aufzubereiteten Filterhilfsmaterial erwärmte Luft aus einer Werkstücktrocknungsvorrichtung zum Trocknen von lackierten Werkstücken zuführbar ist;
- Fig. 7: eine der Fig. 2 entsprechende schematische Darstellung einer sechsten Ausführungsform einer Filteranlage, bei welcher eine Aufbereitungsvorrichtung vorgesehen ist, die eine Verbrennungsvorrichtung umfasst;
- Fig. 8: eine der Fig. 2 entsprechende schematische Darstellung einer siebten Ausführungsform einer Filteranlage, bei welcher die Aufbereitungsvorrichtung eine Verbrennungsvorrichtung und eine Nachverbrennungsvorrichtung umfasst, wobei der Verbrennungsvorrichtung Abluft aus einer Werkstücktrocknungsvorrichtung zum Trocknen von lackierten Werkstücken zuführbar ist;
- Fig. 9: eine der Fig. 2 entsprechende schematische Darstellung einer achten Ausführungsform einer Filteranlage, bei welcher die Aufbereitungsvorrichtung eine Verbrennungsvorrichtung und eine Nachverbrennungsvorrichtung umfasst, wobei der Verbrennungsvorrichtung Abluft aus der Nachverbrennungsvorrichtung zuführbar ist;
- Fig. 10: eine der Fig. 2 entsprechende schematische Darstellung einer neunten Ausführungsform einer Filteranlage, bei welcher die Aufbereitungsvorrichtung eine als Kühlvorrichtung ausgebildete thermische Behandlungsvorrichtung umfasst;
- Fig. 11: eine schematische Darstellung eines im Gegenstromprinzip betriebenen Drehrohrofens;
- Fig. 12: eine schematische Darstellung eines im Gleichstromprinzip betriebenen Drehrohrofens; und
- Fig. 13: eine schematische Darstellung eines Drehrohrofens, welcher mehrere Heizzonen und eine Entnahmevorrichtung umfasst.

Gleiche oder funktional äquivalente Elemente sind in sämtlichen Figuren mit denselben Bezugszeichen versehen.

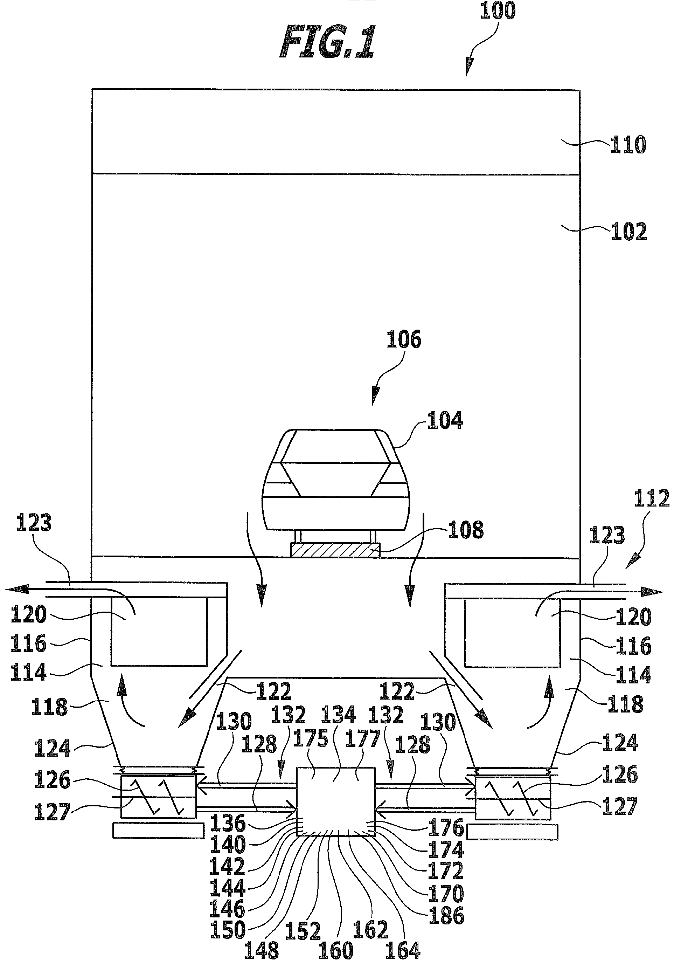

Eine in Fig. 1 dargestellte, als Ganzes mit 100 bezeichnete Lackieranlage umfasst eine Lackierkabine 102, in welcher Werkstücke 104, beispielsweise Fahrzeugkarosserien, mit Lack beaufschlagbar (lackierbar) sind.

Die Werkstücke 104 sind hierzu mittels einer Werkstückfördervorrichtung 108 einem Applizierbereich 106 der Lackierkabine 102 zuführbar und wieder entfernbar.

Die Lackieranlage 100 umfasst ferner ein über der Lackierkabine 102 angeordnetes Plenum 110, mittels welchem dem Applizierbereich 106 in der Lackierkabine 102 Luft zuführbar ist.

Ferner umfasst die Lackieranlage 100 eine unter der Lackierkabine 102 angeordnete Filteranlage 112, mittels welcher die durch den Applizierbereich 106 geführte Luft, welche durch das Applizieren von Lack auf die Werkstücke 104 Lack-Overspray aufgenommen hat, gereinigt werden kann.

Die Filteranlage 112 umfasst mehrere Filtervorrichtungen 114.

Jede Filtervorrichtung 114 umfasst eine Einhausung 116, welche eine Rohgaskammer 118 begrenzt und in welcher mindestens ein Filterelement 120 angeordnet ist.

Ferner umfasst die Filtervorrichtung 114 einen Einlasskanal 122, durch welchen ein Rohgasstrom, welcher durch die durch den Applizierbereich 106 geführte, mit Lack-Overspray beaufschlagte Luft gebildet ist, in die Rohgaskammer 118 der Filtervorrichtung 114 einströmen kann.

Die Filtervorrichtung 114 ist als eine Trockenfiltervorrichtung ausgebildet, das heißt, dass eine Reinigung des Rohgasstroms im Wesentlichen ohne die Zugabe einer Flüssigkeit an den Filterelementen 120 erfolgt. Vielmehr kann dem Rohgasstrom ein Filterhilfsmaterial zugeführt werden, welches vorzugsweise einen Flüssigkeitsanteil in dem Lack-Overspray aufnimmt und zusammen mit dem Lack-Overspray an dem Filterelement 120 abgeschieden werden kann. Hierdurch wird ein Reingasstrom erhalten, welcher die Filtervorrichtung 114 durch eine Reingasleitung 123 verlässt.

Durch das Abscheiden des Systems aus Lack-Overspray und Filterhilfsmaterial wird an den Filterelementen 120 eine Sperrschicht oder eine Schutzschicht gebildet, welche einfach von den Filterelementen 120 abgereinigt werden kann.

Die Filtervorrichtung 114 ist somit eine regenerierbare Filtervorrichtung 114, welche ohne einen Austausch von Filterelementen 120 regeneriert und erneut verwendet werden kann.

Das von den Filterelementen 120 abgereinigte System aus Filterhilfsmaterial und Lack-Overspray kann in einem Aufnahmebehälter 124 der Filtervorrichtung 114, welcher unter dem Filterelement 120 angeordnet ist, aufgenommen werden.

Eine Durchmischeinrichtung 127 dient dem Durchmischen des Systems aus Lack-Overspray und Filterhilfsmaterial in dem Aufnahmebehälter 124.

Eine Filterhilfsmaterialeinbringeinrichtung 126 ist beispielsweise durch die Durchmischeinrichtung 127 in dem Aufnahmebehälter 124 gebildet und dient der Einbringung von Filterhilfsmaterial in den durch die Rohgaskammer 118 strömenden Rohgasstrom.

Mittels einer Entnahmevorrichtung 128 kann das in dem Aufnahmebehälter 124 angeordnete System aus Lack-Overspray und Filterhilfsmaterial aus dem Aufnahmebehälter 124 entnommen werden.

Mittels einer Zuführvorrichtung 130 kann frisches oder aufbereitetes Filterhilfsmaterial der Filtervorrichtung 114 zugeführt werden.

Die Entnahmevorrichtung 128 und die Zuführvorrichtung 130 sind Bestandteil einer Fördervorrichtung 132 zur Förderung von Filterhilfsmaterial und/oder eines Systems aus Lack-Overspray und Filterhilfsmaterial.

Im Filterbetrieb der Filteranlage 112 wird das in den Filtervorrichtungen 114 angeordnete Filterhilfsmaterial im Laufe der Zeit immer stärker mit Lack-Overspray verunreinigt. Hierdurch wird die Fähigkeit des Filterhilfsmaterials, weiteren Lack-Overspray zu binden und somit eine permanente Verunreinigung der Filterelemente 120 zu vermeiden, beeinträchtigt.

In regelmäßigen Abständen muss daher das in den Filtervorrichtungen 114 angeordnete Filterhilfsmaterial durch frisches Hilfsmaterial ersetzt werden. Grundsätzlich kann jedoch auch eine Aufbereitung des Filterhilfsmaterials erfolgen, so dass das bereits ein oder mehrfach verwendete Filterhilfsmaterial zumindest teilweise erneut als aufbereitetes Filterhilfsmaterial in der Filteranlage 112 verwendet werden kann.

Hierzu umfasst die Filteranlage 112 eine Aufbereitungsvorrichtung 134, mittels welcher das System aus Lack-Overspray und Filterhilfsmaterial aufbereitet werden kann.

Die Aufbereitungsvorrichtung 134 umfasst dabei insbesondere mindestens eine Zerkleinerungsvorrichtung 136, mittels welcher Agglomerate aus Lack-Overspray und Filterhilfsmaterial aufgebrochen werden können, so dass die durchschnittliche Korngröße des Systems aus Lack-Overspray und Filterhilfsmaterial reduziert werden kann.

Die Aufbereitungsvorrichtung 134 umfasst vorzugsweise mindestens eine thermische Behandlungsvorrichtung 140, mindestens eine mechanische Behandlungsvorrichtung 160 und/oder mindestens eine pneumatische Behandlungsvorrichtung 170.

Eine thermische Behandlungsvorrichtung 140 kann beispielsweise als eine Heizvorrichtung 142, als eine Kühlvorrichtung 144, als eine Verbrennungsvorrichtung 146, als eine Pyrolysiervorrichtung 148 und/oder als eine Nachverbrennungsvorrichtung 150 ausgebildet sein. Eine Verbrennungsvorrichtung 146 ist beispielsweise ein Drehrohrofen 152.

Eine mechanische Behandlungsvorrichtung 160 kann beispielsweise eine mechanische Mahlvorrichtung 162 sein. Insbesondere kann eine Mahlvorrichtung 162 eine Mühle 164 sein, mittels welcher das System aus Lack-Overspray und Filterhilfsmaterial zur Reduktion der mittleren Korngröße gemahlen werden kann.

Eine pneumatische Behandlungsvorrichtung 170 kann insbesondere eine pneumatische Mahlvorrichtung 172, eine Aufwirbelvorrichtung 174 und/oder eine Druckluftvorrichtung 176 sein. Insbesondere kann mittels einer pneumatischen Behandlungsvorrichtung 170 das System aus Lack-Overspray und Filterhilfsmaterial aufgewirbelt und dadurch zerkleinert und/oder dem durch die Rohgaskammer 118 der Filtervorrichtung 114 geführten Rohgasstrom zugeführt werden. Mindestens eine pneumatische Behandlungsvorrichtung 170 ist hierzu vorzugsweise in der Filtervorrichtung 114, insbesondere in dem Aufnahmebehälter 124, angeordnet.

Grundsätzlich kann vorgesehen sein, dass eine Aufbereitung des Systems aus Lack-Overspray und Filterhilfsmaterial in mindestens einer Filtervorrichtung 114, insbesondere in mindestens einem Aufnahmebehälter 124, erfolgt. So kann beispielsweise vorgesehen sein, dass mindestens eine mechanische Behandlungsvorrichtung 160 und/oder mindestens eine pneumatische Behandlungsvorrichtung 170 zur Aufbereitung des Systems aus Lack-Overspray und Filterhilfsmaterial in der Filtervorrichtung 114, insbesondere in dem Aufnahmebehälter 124, angeordnet ist.

Vorzugsweise ist vorgesehen, dass mittels der Aufbereitungsvorrichtung 134 eine Aufbereitung des Systems aus Lack-Overspray und Filterhilfsmaterial außerhalb mindestens einer Filtervorrichtung 114 durchführbar ist.

Insbesondere kann das System aus Lack-Overspray und Filterhilfsmaterial hierzu mittels der Fördervorrichtung 132 von den Filtervorrichtungen 114 zu der Aufbereitungsvorrichtung 134 und zurück gefördert werden.

Die in Fig. 1 dargestellte Lackieranlage 100 funktioniert wie folgt:
In dem Applizierbereich 106 der Lackierkabine 102 der Lackieranlage 100 wird ein Werkstück 104 lackiert, wodurch die durch die Lackierkabine 102 strömende Luft mit Lack-Overspray beaufschlagt wird.

Die mit Lack-Overspray beladene Luft wird als Rohgasstrom der Filteranlage 112 zugeführt.

Über die Einlasskanäle 122 wird der Rohgasstrom in die Rohgaskammern 118 der Filtervorrichtungen 114 der Filteranlage 112 geführt. Mittels Filterhilfsmaterialeinbringeinrichtungen 126 wird Filterhilfsmaterial in den Rohgasstrom eingebracht.

Der Lack-Overspray aus dem Rohgasstrom lagert sich an das Filterhilfsmaterial und/oder an eine Schutzschicht aus Filterhilfsmaterial an dem mindestens einen Filterelement 120 einer jeden Filtervorrichtung 114 an und wird hierdurch aus dem Rohgasstrom abgeschieden.

Der so gereinigte Gasstrom verlässt dann die Filtervorrichtung 114 als Reingasstrom über die Reingasleitung 123.

Durch die Anlagerung von Lack-Overspray an das Filterhilfsmaterial wird die Funktion des Filterhilfsmaterials mit andauerndem Filterbetrieb der Filtervorrichtungen 114 zunehmend beeinträchtigt, so dass das Filterhilfsmaterial in regelmäßigen Abständen ausgetauscht oder aufbereitet werden muss.

Bei der in Fig. 1 dargestellten Ausführungsform der Lackieranlage 100 ist hierzu allgemein eine Aufbereitungsvorrichtung 134 vorgesehen, welcher das in dem Aufnahmebehälter 124 angeordnete System aus Lack-Overspray und Filterhilfsmaterial mittels der Fördervorrichtung 132 zuführbar ist.

In der Aufbereitungsvorrichtung 134 wird insbesondere eine mittlere Korngröße des Systems aus Lack-Overspray und Filterhilfsmaterial durch Aufbrechen von Agglomeraten aus Lack-Overspray und Filterhilfsmaterial reduziert.

Das aufbereitete System aus Lack-Overspray und Filterhilfsmaterial kann dann als aufbereitetes Filterhilfsmaterial mittels der Fördervorrichtung 132 erneut den Filtervorrichtungen 114 zugeführt werden.

Zur Steuerung und/oder Regelung der Filteranlage 112, insbesondere der Aufbereitungsvorrichtung 134, ist mindestens eine Steuerungsvorrichtung 175 und/oder mindestens eine Regelungsvorrichtung 177 vorgesehen.

In Fig. 1 ist die Filteranlage 112 mit einer nicht näher konkretisierten Aufbereitungsvorrichtung 134 zur allgemeinen Beschreibung der Funktionsweise der Filteranlage 112 dargestellt.

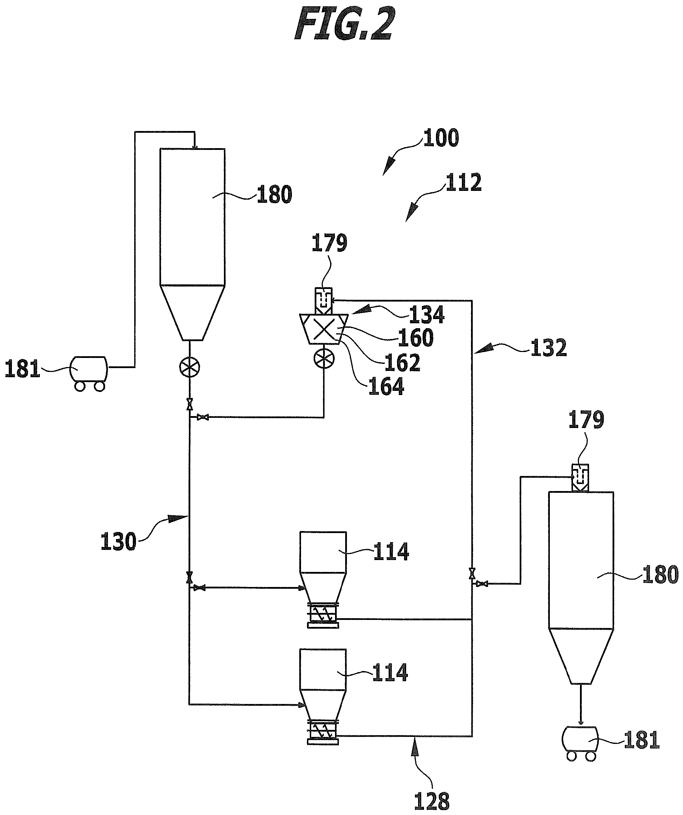

In den nachfolgend beschriebenen Fig. 2 bis 10 sind einzelne Ausführungsformen von Filteranlagen 112 mit verschiedenen Aufbereitungsvorrichtungen 134 dargestellt.

Eine in Fig. 2 dargestellte erste Ausführungsform einer Filteranlage 112 umfasst neben den Filtervorrichtungen 114 und der Fördervorrichtung 132 zwei Speichervorrichtungen 180, in welchen Filterhilfsmaterial und/oder ein System aus Lack-Overspray und Filterhilfsmaterial aufnehmbar und speicherbar ist.

Die Fördervorrichtung 132 nutzt Luft als Transportmedium zum Antreiben (Fördern) des Filterhilfsmaterials und des Systems aus Lack-Overspray und Filterhilfsmaterial, wobei die Luft mittels Abscheidern 179 separierbar ist, um das Filterhilfsmaterial und das System aus Lack-Overspray und Filterhilfsmaterial an einem gewünschten Ort zu deponieren.

Eine der Speichervorrichtungen 180 dient der Aufnahme von frischem, nicht mit Lack-Overspray beladenem Filterhilfsmaterial, während die andere Speichervorrichtung 180 der Aufnahme von mit Lack-Overspray beladenem, nicht mehr zur Aufbereitung vorgesehenem und somit zu entsorgendem Filterhilfsmaterial dient.

Transportvorrichtungen 181, beispielsweise Lastkraftwagen, dienen der Zufuhr von frischem Filterhilfsmaterial und/oder der Abfuhr von zu entsorgendem Filterhilfsmaterial.

Die Aufbereitungsvorrichtung 134 umfasst bei der in Fig. 2 dargestellten ersten Ausführungsform der Filteranlage 112 eine als Mahlvorrichtung 162 ausgebildete mechanische Behandlungsvorrichtung 160, welcher mittels der Fördervorrichtung 132 das System aus Lack-Overspray und Filterhilfsmaterial aus den Filtervorrichtungen 114 zuführbar ist.

Mittels der Mahlvorrichtung 162 kann das System aus Lack-Overspray und Filterhilfsmaterial gemahlen und mittels der Fördervorrichtung 132 erneut den Filtervorrichtungen 114 zugeführt werden.

Im Übrigen stimmt die in Fig. 2 dargestellte erste Ausführungsform der Filteranlage 112 hinsichtlich Aufbau und Funktion mit der allgemein in Fig. 1 beschriebenen Filteranlage 112 überein, so dass auf deren vorstehende Beschreibung insoweit Bezug genommen wird.

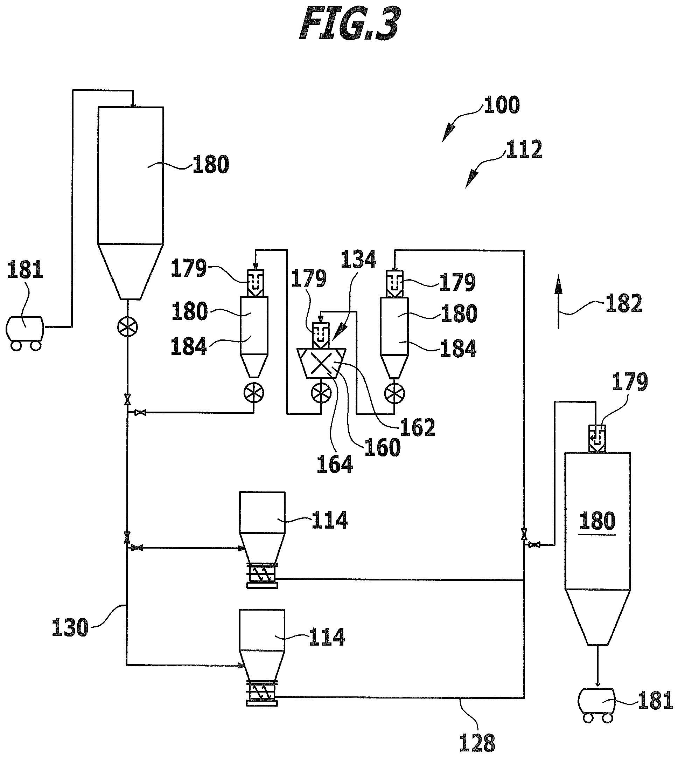

Eine in Fig. 3 dargestellte zweite Ausführungsform einer Filteranlage 112 unterscheidet sich von der in Fig. 2 dargestellten ersten Ausführungsform im Wesentlichen dadurch, dass bezüglich einer Förderrichtung 182 des Systems aus Lack-Overspray und Filterhilfsmaterial vor und nach der Aufbereitungsvorrichtung 134 jeweils eine Zwischenspeichervorrichtung 184 zur Zwischenspeicherung des Systems aus Lack-Overspray und Filterhilfsmaterial vorgesehen ist.

Die bezüglich der Förderrichtung 182 vor der Aufbereitungsvorrichtung 134 angeordnete Zwischenspeichervorrichtung 184 dient der Zwischenspeicherung von noch aufzubereitendem System aus Lack-Overspray und Filterhilfsmaterial.

Die bezüglich der Förderrichtung 182 hinter der Aufbereitungsvorrichtung 134 angeordnete Zwischenspeichervorrichtung 184 dient der Aufnahme des mittels der Aufbereitungsvorrichtung 134 aufbereiteten Systems aus Lack-Overspray und Filterhilfsmaterial.

Im Übrigen stimmt die in Fig. 3 dargestellte zweite Ausführungsform der Filteranlage 112 hinsichtlich Aufbau und Funktion mit der in Fig. 2 dargestellten ersten Ausführungsform überein, so dass auf deren vorstehende Beschreibung insoweit Bezug genommen wird.

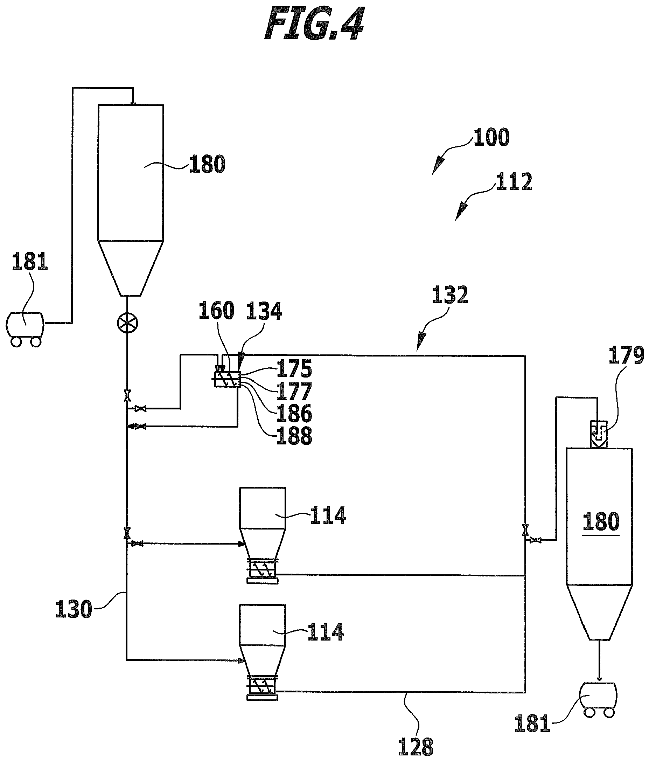

Eine in Fig. 4 dargestellte dritte Ausführungsform einer Filteranlage 112 unterscheidet sich von der in Fig. 2 dargestellten ersten Ausführungsform im Wesentlichen dadurch, dass die Aufbereitungsvorrichtung 134 als eine Mischvorrichtung 186 ausgebildet ist.

Mittels der Mischvorrichtung 186 kann das aus den Filtervorrichtungen 114 entnommene System aus Lack-Overspray und Filterhilfsmaterial mit frischem, unbeladenem Filterhilfsmaterial aus der Speichervorrichtung 180 vermischt werden, so dass ein wiederverwendbares System aus Lack-Overspray und Filterhilfsmaterial, das heißt ein aufbereitetes System aus Lack-Overspray und Filterhilfsmaterial, erhalten werden kann.

Vorzugsweise umfasst die Mischvorrichtung 186 eine Messvorrichtung 188, mittels welcher ermittelbar ist, wie stark das Filterhilfsmaterial mit Lack-Overspray beladen ist. Auf diese Weise kann bestimmt werden, in welchem Maße dem System aus Lack-Overspray und Filterhilfsmaterial frisches, unbeladenes Filterhilfsmaterial zugemischt werden muss, um die Filterfunktion des Filterhilfsmaterials bei einer erneuten Zuführung zu der Filtervorrichtung 114 zu gewährleisten.

Zur Steuerung und/oder Regelung der Mischvorrichtung 186, insbesondere in Abhängigkeit von mittels der Messvorrichtung 188 ermittelten Werten, dienen die Steuerungsvorrichtung 175 und/oder die Regelungsvorrichtung 177.

Im Übrigen stimmt die in Fig. 4 dargestellte dritte Ausführungsform der Filteranlage 112 hinsichtlich Aufbau und Funktion mit der in Fig. 2 dargestellten ersten Ausführungsform überein, so dass auf deren vorstehende Beschreibung insoweit Bezug genommen wird.

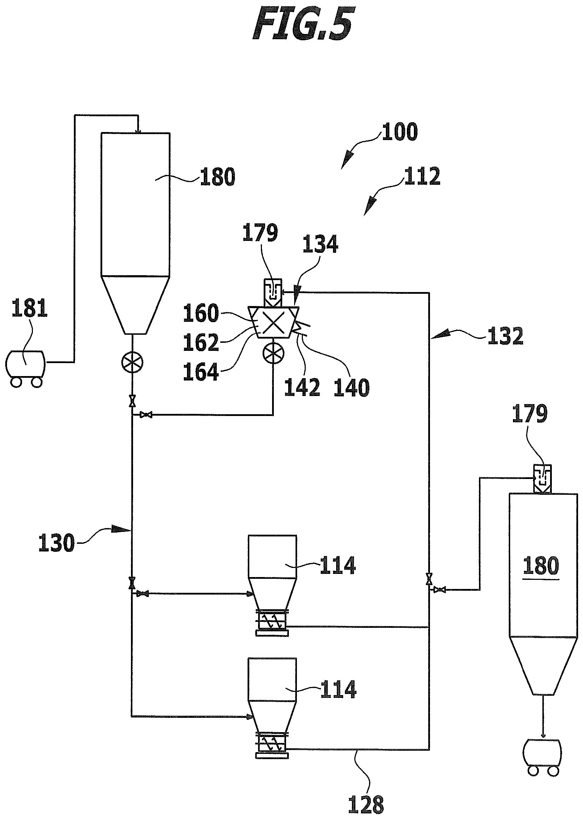

Eine in Fig. 5 dargestellte vierte Ausführungsform einer Filteranlage 112 unterscheidet sich von der in Fig. 2 dargestellten ersten Ausführungsform im Wesentlichen dadurch, dass die Aufbereitungsvorrichtung 134 eine mechanische Behandlungsvorrichtung 160 umfasst, welche mit einer thermischen Behandlungsvorrichtung 140 versehen ist.

Die thermische Behandlungsvorrichtung 140 ist dabei als Heizvorrichtung 142 ausgebildet und dient dem Erwärmen des in der mechanischen Behandlungsvorrichtung 160 angeordneten Systems aus Lack-Overspray und Filterhilfsmaterial.

Das System aus Lack-Overspray und Filterhilfsmaterial kann mittels der Heizvorrichtung 142 insbesondere auf eine Temperatur zwischen ungefähr 50 °C und ungefähr 100 °C erwärmt werden. Hierdurch können in dem System aus Lack-Overspray und Filterhilfsmaterial vorhandene Lösemittel verdampft (abgedunstet) werden.

Ferner kann mittels der Heizvorrichtung 142 ein Erhitzen des Systems aus Lack-Overspray und Filterhilfsmaterial auf eine Temperatur zwischen ungefähr 100 °C und ungefähr 180 °C erfolgen. Hierdurch kann der Lack-Overspray ausgehärtet werden, so dass das System aus Lack-Overspray und Filterhilfsmaterial mittels der mechanischen Behandlungsvorrichtung 160 einfacher aufgemahlen werden kann.

Im Übrigen stimmt die in Fig. 5 dargestellte vierte Ausführungsform der Filteranlage 112 hinsichtlich Aufbau und Funktion mit der in Fig. 2 dargestellten ersten Ausführungsform überein, so dass auf deren vorstehende Beschreibung insoweit Bezug genommen wird.

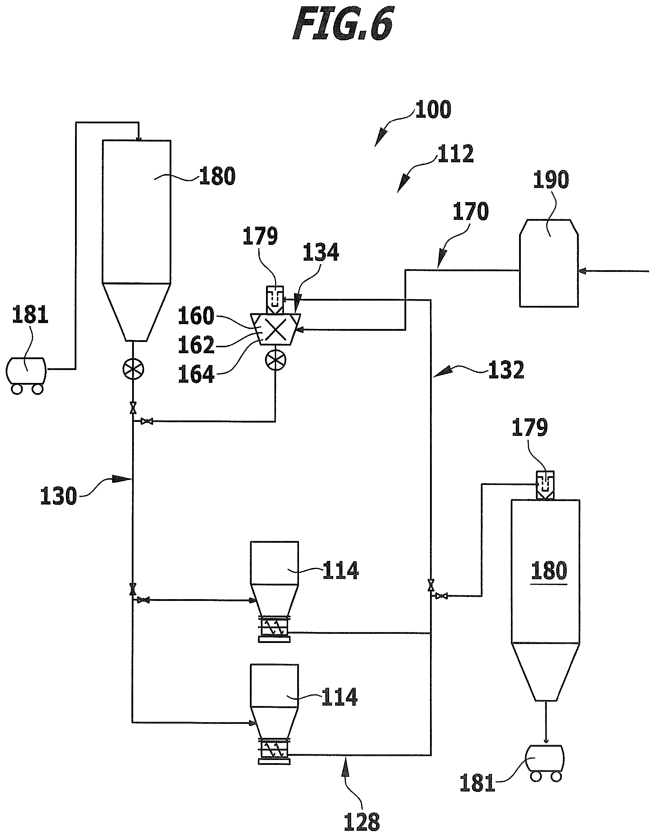

Eine in Fig. 6 dargestellte fünfte Ausführungsform einer Filteranlage 112 unterscheidet sich von der in Fig. 5 dargestellten vierten Ausführungsform im Wesentlichen dadurch, dass die Aufbereitungsvorrichtung 134 eine mechanische Behandlungsvorrichtung 160 umfasst, welcher Abluft aus einer Werkstücktrocknungsvorrichtung 190 zum Trocknen von lackierten Werkstücken 104 zuführbar ist.

Die Aufbereitungsvorrichtung 134 umfasst somit eine pneumatische Behandlungsvorrichtung 170, mittels welcher das System aus Lack-Overspray und Filterhilfsmaterial mit Luft, insbesondere mit warmer Luft, beaufschlagbar ist.

Mittels der Abluft aus der Werkstücktrocknungsvorrichtung 190 kann insbesondere ein Lackanteil in dem System aus Lack-Overspray und Filterhilfsmaterial getrocknet werden, so dass eine einfachere mechanische Aufbereitung des Systems aus Lack-Overspray und Filterhilfsmaterial, beispielsweise durch Zermahlen des Systems aus Lack-Overspray und Filterhilfsmaterial mittels einer als Mahlvorrichtung 162 ausgebildeten mechanischen Behandlungsvorrichtung 160, möglich ist.

Im Übrigen stimmt die in Fig. 6 dargestellte fünfte Ausführungsform einer Filteranlage 112 hinsichtlich Aufbau und Funktion mit der in Fig. 5 dargestellten vierten Ausführungsform überein, so dass auf deren vorstehende Beschreibung insoweit Bezug genommen wird.

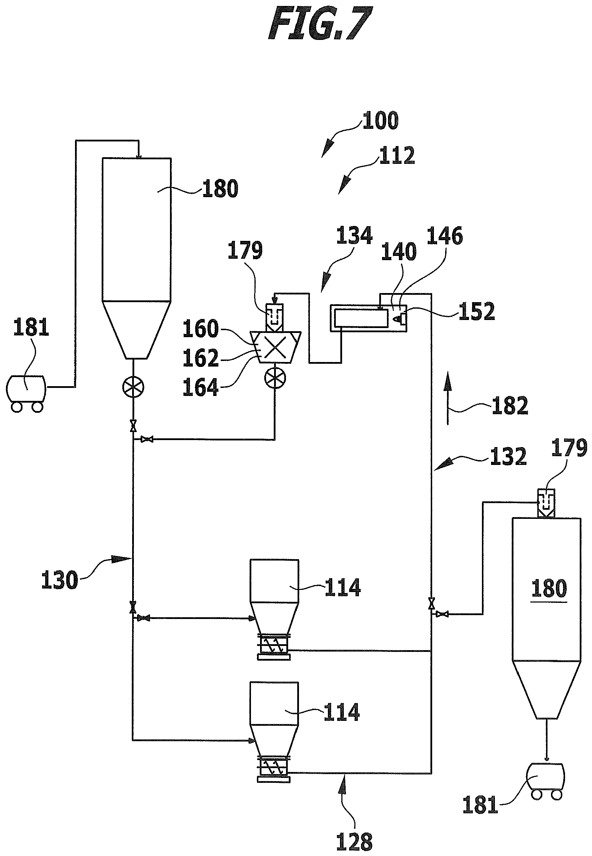

Eine in Fig. 7 dargestellte sechste Ausführungsform einer Filteranlage 112 unterscheidet sich von der in Fig. 2 dargestellten ersten Ausführungsform einer Filteranlage 112 im Wesentlichen dadurch, dass bezüglich der Förderrichtung 182 vor der mechanischen Behandlungsvorrichtung 160 eine als Verbrennungsvorrichtung 146, beispielsweise als ein Drehrohrofen 152, ausgebildete thermische Behandlungsvorrichtung 140 vorgesehen ist.

Der thermischen Behandlungsvorrichtung 140 kann das System aus Lack-Overspray und Filterhilfsmaterial aus den Filtervorrichtungen 114 zugeführt werden, um einen Organikanteil in dem System aus Lack-Overspray und Filterhilfsmaterial zu verbrennen. Insbesondere dann, wenn die thermische Behandlungsvorrichtung 140 als Drehrohrofen 152 ausgebildet ist, kann mittels der thermischen Behandlungsvorrichtung 140 einerseits eine Behandlung des Systems aus Lack-Overspray und Filterhilfsmaterial und zugleich eine Förderung des Systems aus Lack-Overspray und Filterhilfsmaterial, insbesondere eine Förderung zu der mechanischen Behandlungsvorrichtung 160 hin, erfolgen.

Im Übrigen stimmt die in Fig. 7 dargestellte sechste Ausführungsform einer Filteranlage 112 hinsichtlich Aufbau und Funktion mit der in Fig. 2 dargestellten ersten Ausführungsform überein, so dass auf deren vorstehende Beschreibung insoweit Bezug genommen wird.

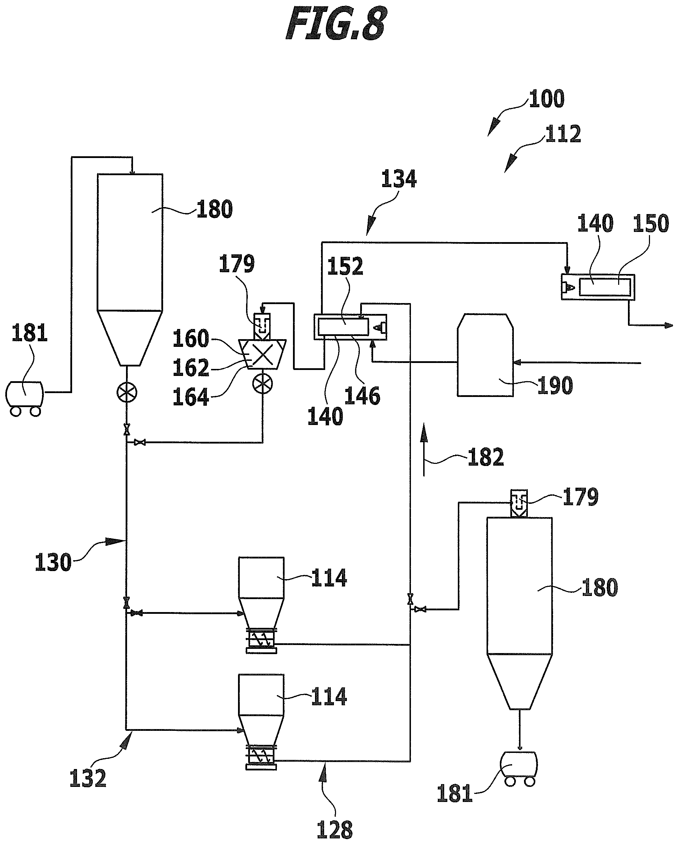

Eine in Fig. 8 dargestellte siebte Ausführungsform einer Filteranlage 112 unterscheidet sich von der in Fig. 7 dargestellten sechsten Ausführungsform im Wesentlichen dadurch, dass die Aufbereitungsvorrichtung 134 zusätzlich zu der mechanischen Behandlungsvorrichtung 160 und der als Verbrennungsvorrichtung 146 ausgebildeten thermischen Behandlungsvorrichtung 140 eine als Nachverbrennungsvorrichtung 150 ausgebildete thermische Behandlungsvorrichtung 140 umfasst.

Die Nachverbrennungsvorrichtung 150 dient der Nachverbrennung von Abluft, insbesondere der Abluft aus der als Verbrennungsvorrichtung 146 ausgebildeten thermischen Behandlungsvorrichtung 140.

Der Nachverbrennungsvorrichtung 140 wird somit nicht das System aus Lack-Overspray und Filterhilfsmaterial, sondern lediglich die Abluft aus der als Drehrohrofen 152 ausgebildeten Verbrennungsvorrichtung 146 zugeführt.

Die für den Betrieb der als Drehrohrofen 152 ausgebildeten Verbrennungsvorrichtung 146 benötigte Luft wird bei der in Fig. 8 dargestellten siebten Ausführungsform der Filteranlage 112 von einer Werkstücktrocknungsvorrichtung 190 zum Trocknen von lackierten Werkstücken 104 bereitgestellt.

Bei der in Fig. 8 dargestellten siebten Ausführungsform der Filteranlage 112 ergibt sich somit ein Luftstrom von der Werkstücktrocknungsvorrichtung 190 zu der als Verbrennungsvorrichtung 146 ausgebildeten thermischen Behandlungsvorrichtung 140 und schließlich zu der als Nachverbrennungsvorrichtung 150 ausgebildeten thermischen Behandlungsvorrichtung 140. Eine solche Luftführung hat den Vorteil, dass die für den Betrieb der thermischen Behandlungsvorrichtung 140 benötigten Temperaturen einfacher und mit geringem zusätzlichen Energieeintrag erreicht werden können. Hierdurch kann Brennstoff, beispielsweise Gas, insbesondere Erdgas, für den Betrieb der thermischen Behandlungsvorrichtung 140 eingespart werden.

Im Übrigen stimmt die in Fig. 8 dargestellte siebte Ausführungsform der Filteranlage 112 hinsichtlich Aufbau und Funktion mit der in Fig. 7 dargestellten sechsten Ausführungsform überein, so dass auf deren vorstehende Beschreibung insoweit Bezug genommen wird.

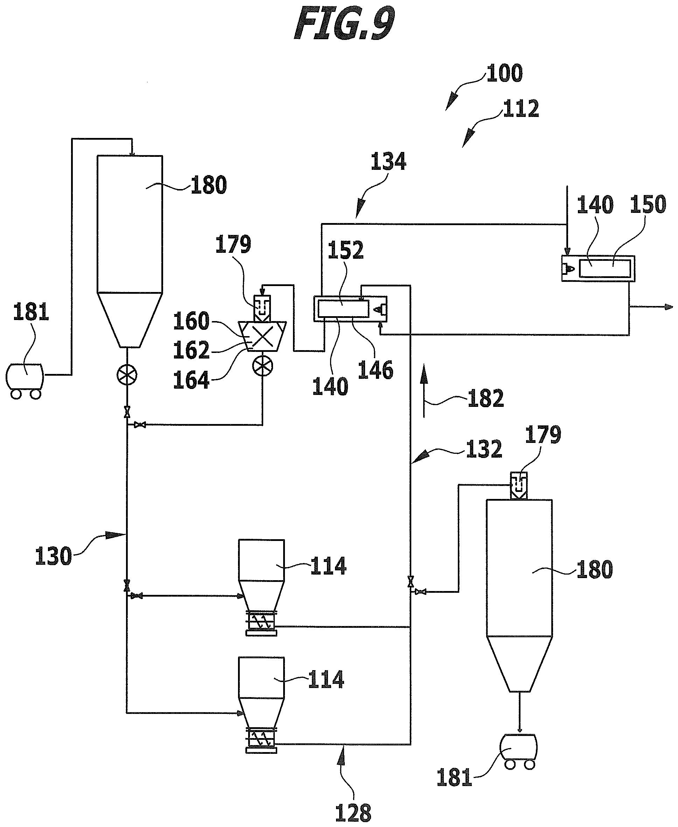

Eine in Fig. 9 dargestellte achte Ausführungsform einer Filteranlage 112 unterscheidet sich von der in Fig. 8 dargestellten siebten Ausführungsform im Wesentlichen dadurch, dass die der Verbrennungsvorrichtung 146 zugeführte Luft nicht aus einer Werkstücktrocknungsvorrichtung 190 stammt, sondern dass hierzu Abluft aus der als Nachverbrennungsvorrichtung 150 ausgebildeten thermischen Behandlungsvorrichtung 140 verwendet wird. Auf diese Weise kann eine Zirkulation des Luftstroms (oder zumindest eines Teils des Luftstroms) durch die Verbrennungsvorrichtung 146 und die Nachverbrennungsvorrichtung 150 realisiert werden.

Im Übrigen stimmt die in Fig. 9 dargestellte achte Ausführungsform einer Filteranlage 112 hinsichtlich Aufbau und Funktion mit der in Fig. 8 dargestellten siebten Ausführungsform überein, so dass auf deren vorstehende Beschreibung insoweit Bezug genommen wird.

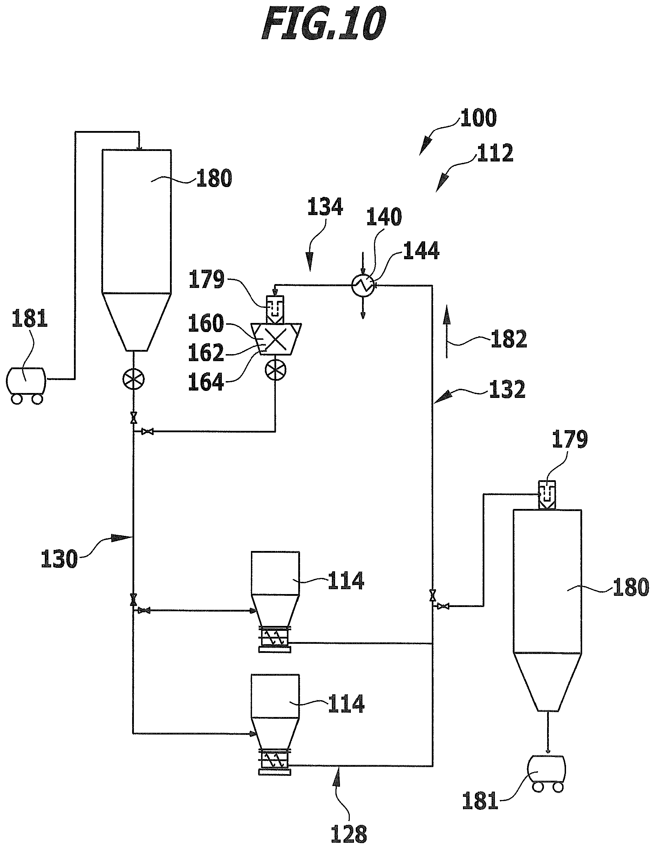

Eine in Fig. 10 dargestellte neunte Ausführungsform einer Filteranlage 112 unterscheidet sich von der in Fig. 2 dargestellten ersten Ausführungsform im Wesentlichen dadurch, dass die Aufbereitungsvorrichtung 134 zusätzlich zu der mechanischen Behandlungsvorrichtung 160 eine als Kühlvorrichtung 144 ausgebildete thermische Behandlungsvorrichtung 140 umfasst.

Die Kühlvorrichtung 144 ist dabei vorzugsweise bezüglich der Förderrichtung 182 des Systems aus Lack-Overspray und Filterhilfsmaterial vor der mechanischen Behandlungsvorrichtung 160 angeordnet.

Mittels der Kühlvorrichtung 144 kann das System aus Lack-Overspray und Filterhilfsmaterial gekühlt werden. Insbesondere kann das System aus Lack-Overspray und Filterhilfsmaterial mittels der Kühlvorrichtung 144 auf eine Temperatur heruntergekühlt werden, welche unterhalb einer Glasübergangstemperatur des Lack-Overspray liegt. Beispielsweise kann das System aus Lack-Overspray und Filterhilfsmaterial auf eine Temperatur von ungefähr 5 °C heruntergekühlt werden.

Die Kühlung des Systems aus Lack-Overspray und Filterhilfsmaterial führt dazu, dass der Lackanteil in dem System versprödet und hierdurch einfacher mechanisch bearbeitet, insbesondere einfacher gemahlen, werden kann.

Bei einer weiteren (nicht dargestellten) Ausführungsform einer Filteranlage 112 kann vorgesehen sein, dass die Kühlung des Systems aus Lack-Overspray und Filterhilfsmaterial nicht vorgelagert vor der mechanischen Behandlungsvorrichtung 160, sondern in der mechanischen Behandlungsvorrichtung 160 erfolgt.

Im Übrigen stimmt die in Fig. 10 dargestellte neunte Ausführungsform einer Filteranlage 112 hinsichtlich Aufbau und Funktion mit der in Fig. 2 dargestellten ersten Ausführungsform überein, so dass auf deren vorstehende Beschreibung insoweit Bezug genommen wird.

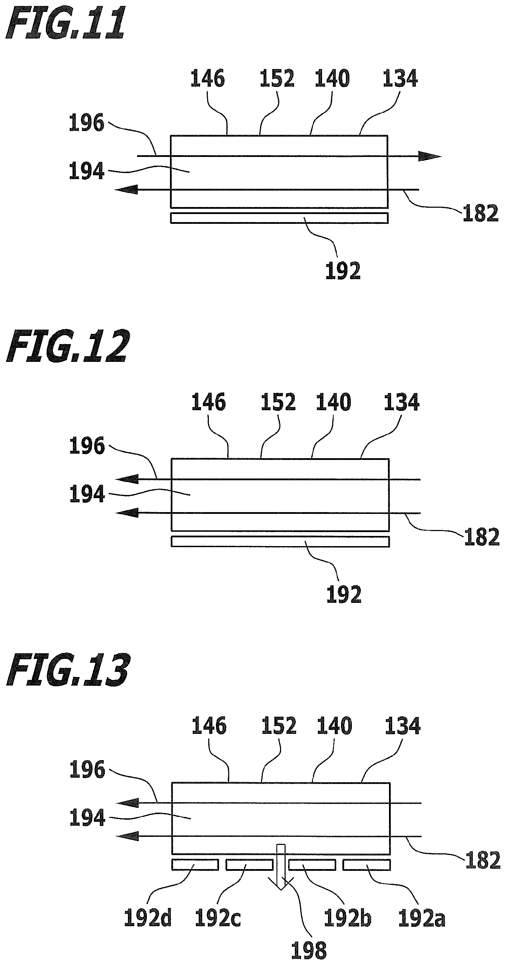

In den Fig. 11 bis 13 sind verschiedene Ausführungsformen von Verbrennungsvorrichtungen 146 dargestellt. Insbesondere sind die Verbrennungsvorrichtung 146 Drehrohröfen 152.

Bei der in Fig. 11 dargestellten Ausführungsform ist vorgesehen, dass der Drehrohrofen 152 eine Heizzone 192 zum Heizen eines Innenraums 194 des Drehrohrofens 152 aufweist.

Der Drehrohrofen 152 kann dabei im Gegenstromprinzip betrieben werden, das heißt, dass das System aus Lack-Overspray und Filterhilfsmaterial in einer Förderrichtung 182 durch den Innenraum 194 des Drehrohrofens 152 gefördert wird, welche einer Gasförderrichtung 196, in welcher ein Gas, insbesondere Prozessgas, durch den Innenraum 194 des Drehrohrofens 152 gefördert wird, entgegengesetzt ist.

Der Drehrohrofen 152 kann hierdurch besonders kurz ausgebildet sein, da das in den Innenraum 194 des Drehrohrofens 152 eingebrachte System aus Lack-Overspray und Filterhilfsmaterial direkt beim Eintritt in den Innenraum 194 mit heißem Gas, insbesondere Prozessgas, in Kontakt kommt und somit schneller aufbereitet wird.

Eine in Fig. 12 dargestellte zweite Ausführungsform einer als Drehrohrofen 152 ausgebildeten Verbrennungsvorrichtung 146 unterscheidet sich von der in Figur 11 dargestellten Ausführungsform im Wesentlichen dadurch, dass die Gasförderrichtung 196 und die Förderrichtung 182 des Systems aus Lack-Overspray und Filterhilfsmaterial parallel und gleichsinnig zueinander ausgerichtet sind. Der in Fig. 12 dargestellte Drehrohrofen 152 wird somit im Gleichstrombetrieb betrieben.

Hierdurch können sich bildende Kondensate vorzugsweise länger im heißen Prozessgas gehalten werden, so dass die Wahrscheinlichkeit größer wird, dass diese auch vollständig umgesetzt werden. Die Menge an sich bildenden teerartigen Rückständen kann hierdurch vorzugsweise verringert werden.

Im Übrigen stimmt die in Fig. 12 dargestellte Ausführungsform des Drehrohrofens 152 hinsichtlich Aufbau und Funktion mit der in Fig. 11 dargestellten Ausführungsform überein, so dass auf deren vorstehende Beschreibung insoweit Bezug genommen wird.

Eine in Fig. 13 dargestellte dritte Ausführungsform einer als Drehrohrofen 152 ausgebildeten Verbrennungsvorrichtung 146 unterscheidet sich von der in Fig. 12 dargestellten Ausführungsform im Wesentlichen dadurch, dass anstelle einer einzigen Heizzone 192 mehrere, insbesondere vier, Heizzonen 192 vorgesehen sind.

Bezüglich der Gasförderrichtung 196 und der Förderrichtung 182 des Systems aus Lack-Overspray und Filterhilfsmaterial, welche parallel und gleichsinnig zueinander ausgerichtet sind, sind dabei die Heizzonen 192a, 192b, 192c und 192d aufeinanderfolgend angeordnet.

Die in Fig. 13 dargestellte Ausführungsform des Drehrohrofens 152 unterscheidet sich ferner von der in Fig. 12 dargestellten Ausführungsform dadurch, dass das System aus Lack-Overspray und Filterhilfsmaterial, insbesondere das aufbereitete Filterhilfsmaterial, nicht an einem Ende des Drehrohrofens 152 aus demselben entnommen wird. Vielmehr ist eine Entnahmevorrichtung 198 vorgesehen, mittels welcher das System aus Lack-Overspray und Filterhilfsmaterial zwischen zwei Heizzonen 192, insbesondere zwischen der Heizzone 192b und der Heizzone 192c, entnommen werden kann.

Eine derartige Entnahmevorrichtung 198 ermöglicht es, die in der Förderrichtung 182 des Systems aus Lack-Overspray und Filterhilfsmaterial und der Gasförderrichtung 196 auf die Entnahmevorrichtung 198 folgenden Heizzonen 192c und 192d stärker zu heizen. Hierdurch kann ein vollständiges Verbrennen der aus dem System aus Lack-Overspray und Filterhilfsmaterial entwichenen Stoffe garantiert werden, ohne eine Beeinträchtigung des Filterhilfsmaterials durch Überhitzen desselben befürchten zu müssen.

Im Übrigen stimmt die in Fig. 13 dargestellte Ausführungsform des Drehrohrofens 152 hinsichtlich Aufbau und Funktion mit der in Fig. 12 dargestellten Ausführungsform überein, so dass auf deren vorstehende Beschreibung insoweit Bezug genommen wird.

Zur Aufbereitung des Systems aus Lack-Overspray und Filterhilfsmaterial können grundsätzlich einzelne oder mehrere Aspekte der beschriebenen Ausführungsformen von Filteranlagen 112 beliebig miteinander kombiniert werden. So kann beispielsweise vorgesehen sein, dass das System aus Lack-Overspray und Filterhilfsmaterial zunächst gemäß Fig. 7 einer Verbrennungsvorrichtung 146 zugeführt und anschließend gemäß Fig. 10 mittels einer Kühlvorrichtung 144 gekühlt wird.

Dadurch, dass bei sämtlichen beschriebenen Ausführungsformen der Filteranlage 112 eine Aufbereitung des Systems aus Lack-Overspray und Filterhilfsmaterial erfolgt, wird ein besonders materialsparender und effizienter Betrieb der Filteranlage 112 und somit auch der Lackieranlage 100 ermöglicht.

## Patentansprüche

1. Filteranlage, umfassend eine Filtervorrichtung (114) zur Reinigung eines mit Lack-Overspray beladenen Rohgasstroms, wobei die Filtervorrichtung (114) als regenerierbare Filtervorrichtung (114) ausgebildet ist und Folgendes umfasst:
- ein Filterelement (120), welches im Filterbetrieb mit einer Sperrschicht und/oder einer Schutzschicht versehen ist, welche Filterhilfsmaterial umfasst, wobei Lack-Overspray aus dem mit Lack-Overspray beladenen Rohgasstrom zusammen mit dem Rohgasstrom zugeführtem Filterhilfsmaterial an dem Filterelement (120) abscheidbar ist;
- einen Aufnahmebehälter (124) zur Aufnahme eines Systems aus Lack-Overspray und Filterhilfsmaterial; und
- eine Entnahmevorrichtung (128) zur Entnahme von zumindest einem Teil des Systems aus Lack-Overspray und Filterhilfsmaterial aus dem Aufnahmebehälter (124),
**dadurch gekennzeichnet,**
**dass** die Filteranlage (112) eine Aufbereitungsvorrichtung (134) zur Aufbereitung des Systems aus Lack-Overspray und Filterhilfsmaterial umfasst, wobei die Aufbereitungsvorrichtung (134) eine thermische Behandlungsvorrichtung (140) umfasst, mittels welcher das System aus Lack-Overspray und Filterhilfsmaterial zur Aufbereitung desselben thermisch behandelbar ist,
wobei die thermische Behandlungsvorrichtung (140) als eine Verbrennungsvorrichtung ausgebildet ist,
wobei als Verbrennungsvorrichtung ein Wirbelschichttrockner verwendet wird, wobei das System aus Lack-Overspray und Filterhilfsmaterial zur Aufbereitung desselben getrocknet, gebrannt und/oder verbrannt wird, wobei die Filteranlage (112) eine Mischvorrichtung (186) umfasst, mittels welcher unbeladenes, frisches Filterhilfsmaterial und ein System aus Lack-Overspray und Filterhilfsmaterial zusammenführbar und mischbar sind,
wobei die Filteranlage (112) eine Steuerungsvorrichtung (175) und/oder eine Regelungsvorrichtung (177) umfasst, mittels welcher ein Mischungsverhältnis zum Mischen des unbeladenen, frischen Filterhilfsmaterials mit dem System aus Lack-Overspray und Filterhilfsmaterial in Abhängigkeit von dem Beladungsgrad des Filterhilfsmaterials mit Lack-Overspray steuerbar und/oder regelbar ist.

2. Filteranlage nach Anspruch 1, **dadurch gekennzeichnet, dass** ein in dem Aufnahmebehälter (124) aufbereiteter Teil und/oder ein aus dem Aufnahmebehälter (124) entnommener und außerhalb des Aufnahmebehälters (124) aufbereiteter Teil des Systems aus Lack-Overspray und Filterhilfsmaterial erneut als Filterhilfsmaterial in den Rohgasstrom einbringbar ist.

3. Filteranlage nach einem der Ansprüche 1 oder 2, **dadurch gekennzeichnet, dass** mittels der Aufbereitungsvorrichtung (134) eine Aufbereitung des Systems aus Lack-Overspray und Filterhilfsmaterial außerhalb der Filtervorrichtung (114) durchführbar ist, wobei zumindest ein Teil des Systems aus Lack-Overspray und Filterhilfsmaterial aus dem Aufnahmebehälter (124) entnehmbar ist und außerhalb des Aufnahmebehälters (124) aufbereitbar ist.

4. Filteranlage nach einem der Ansprüche 1 bis 3, **dadurch gekennzeichnet, dass** die Aufbereitungsvorrichtung (134) eine mechanische Behandlungsvorrichtung (160) und/oder eine pneumatische Behandlungsvorrichtung (170) umfasst, mittels welcher das System aus Lack-Overspray und Filterhilfsmaterial zur Aufbereitung desselben mechanisch behandelbar und/oder mit Luft beaufschlagbar ist.

5. Filteranlage nach einem der Ansprüche 1 bis 4, **dadurch gekennzeichnet, dass** die Filteranlage (112) eine Speichervorrichtung (180) zur Aufnahme und Speicherung von Filterhilfsmaterial und/oder eines Systems aus Lack-Overspray und Filterhilfsmaterial umfasst.

6. Filteranlage nach Anspruch 5, **dadurch gekennzeichnet, dass** die Speichervorrichtung (180) eine Zwischenspeichervorrichtung (184) zur Zwischenspeicherung eines aufbereiteten Systems aus Lack-Overspray und Filterhilfsmaterial ist, wobei der Zwischenspeichervorrichtung (184) das aufbereitete System aus Lack-Overspray und Filterhilfsmaterial aus der Aufbereitungsvorrichtung (134) zuführbar ist und wobei mittels der Zwischenspeichervorrichtung (184) das aufbereitete System aus Lack-Overspray und Filterhilfsmaterial für die Filtervorrichtung (114) bereitstellbar ist.

7. Filteranlage nach einem der Ansprüche 5 oder 6, **dadurch gekennzeichnet, dass** die Speichervorrichtung (180) eine Zwischenspeichervorrichtung (184) zur Zwischenspeicherung eines aus dem Aufnahmebehälter (124) entnommenen, der Aufbereitungsvorrichtung (134) zuzuführenden Systems aus Lack-Overspray und Filterhilfsmaterial ist, wobei der Zwischenspeichervorrichtung (184) das System aus Lack-Overspray und Filterhilfsmaterial aus dem Aufnahmebehälter (124) zuführbar ist und wobei mittels der Zwischenspeichervorrichtung (184) das System aus Lack-Overspray und Filterhilfsmaterial für die Aufbereitungsvorrichtung (134) bereitstellbar ist.

8. Filteranlage nach einem der Ansprüche 1 bis 7, **dadurch gekennzeichnet, dass** mittels der Steuerungsvorrichtung (175) und/oder mittels der Regelungsvorrichtung (177) ermittelbar ist, ob das der Filtervorrichtung (114) zur Reinigung des Rohgasstroms bereitgestellte Filterhilfsmaterial unbeladenes, frisches Filterhilfsmaterial oder ein System aus Lack-Overspray und Filterhilfsmaterial ist.

9. Verfahren zum Betrieb einer Filteranlage (112), insbesondere einer Filteranlage (112) nach einem der Ansprüche 1 bis 8, umfassend Folgendes:
- Zuführen eines mit Lack-Overspray beladenen Rohgasstroms zu einer regenerierbar ausgebildeten Filtervorrichtung (114) einer Filteranlage (112);
- Einbringen von Filterhilfsmaterial in den Rohgasstrom;
- Abscheiden eines Systems aus Lack-Overspray und Filterhilfsmaterial an einem Filterelement (120) der Filtervorrichtung (114), welches im Filterbetrieb mit einer Sperrschicht und/oder einer Schutzschicht versehen ist, welche Filterhilfsmaterial umfasst, und
- Aufnehmen des Systems aus Lack-Overspray und Filterhilfsmaterial in einem Aufnahmebehälter (124),
**dadurch gekennzeichnet,**
**dass** zumindest ein Teil des Systems aus Lack-Overspray und Filterhilfsmaterial mittels einer Aufbereitungsvorrichtung (134) aufbereitet wird, wobei das System aus Lack-Overspray und Filterhilfsmaterial zur Aufbereitung desselben mittels einer thermischen Behandlungsvorrichtung (140) thermisch behandelt wird,
wobei die thermische Behandlungsvorrichtung (140) als eine Verbrennungsvorrichtung ausgebildet ist,
wobei als Verbrennungsvorrichtung ein Wirbelschichttrockner verwendet wird, wobei das System aus Lack-Overspray und Filterhilfsmaterial zur Aufbereitung desselben getrocknet, gebrannt und/oder verbrannt wird, wobei ein Mischungsverhältnis zum Mischen des unbeladenen, frischen Filterhilfsmaterials mit dem System aus Lack-Overspray und Filterhilfsmaterial in Abhängigkeit von dem Beladungsgrad des Filterhilfsmaterials mit Lack-Overspray gesteuert und/oder geregelt wird.

10. Verfahren nach Anspruch 9, **dadurch gekennzeichnet, dass** ein Teil des Systems aus Lack-Overspray und Filterhilfsmaterial in dem Aufnahmebehälter (124) aufbereitet und/oder aus dem Aufnahmebehälter (124) entnommen und außerhalb des Aufnahmebehälters (124) aufbereitet und erneut als Filterhilfsmaterial in den Rohgasstrom eingebracht wird.

11. Verfahren nach einem der Ansprüche 9 oder 10, **dadurch gekennzeichnet, dass** zumindest ein Teil des Systems aus Lack-Overspray und Filterhilfsmaterial aus dem Aufnahmebehälter (124) entnommen und außerhalb des Aufnahmebehälters (124) aufbereitet wird.

12. Verfahren nach einem der Ansprüche 9 bis 11, **dadurch gekennzeichnet, dass** das System aus Lack-Overspray und Filterhilfsmaterial zur Aufbereitung desselben mit Druckluft beaufschlagt wird.

13. Verfahren nach einem der Ansprüche 9 bis 12, **dadurch gekennzeichnet, dass** dem System aus Lack-Overspray und Filterhilfsmaterial zur Aufbereitung desselben mindestens ein Aufbereitungshilfsstoff zugeführt wird.

14. Verfahren nach einem der Ansprüche 9 bis 13, **dadurch gekennzeichnet, dass** mindestens zwei Verfahrensschritte zur Aufbereitung des Systems aus Lack-Overspray und Filterhilfsmaterial durchgeführt werden.

## Claims

1. Filter installation, comprising a filter device (114) for cleaning a raw gas flow loaded with paint overspray, the filter device (114) being designed as a regenerable filter device (114) and comprising the following:
- a filter element (120) which, during filter operation, is provided with a barrier layer and/or a protective layer which comprises filter aid material, it being possible for paint overspray from the raw gas flow loaded with paint overspray to be deposited on the filter element (120) together with the filter aid material supplied to the raw gas flow;
- a receiving container (124) for receiving a system of paint overspray and filter aid material; and
- a removal device (128) for removing at least part of the system of paint overspray and filter aid material from the receiving container (124),
**characterized in that**
the filter installation (112) comprises a processing device (134) for processing the system of paint overspray and filter aid material, the processing device (134) comprising a thermal treatment device (140) by means of which the system of paint overspray and filter aid material can be thermally treated in order to process said system,
the thermal treatment device (140) being designed as a combustion device,
a fluidized bed dryer being used as the combustion device, the system of paint overspray and filter aid material being dried, burned and/or combusted in order to process said system, the filter installation (112) comprising a mixing device (186) by means of which unloaded, fresh filter aid material and a system of paint overspray and filter aid material can be combined and mixed,
the filter installation (112) comprising an open-loop control device (175) and/or a closed-loop control device (177), by means of which a mixing ratio for mixing the unloaded, fresh filter aid material with the system of paint overspray and filter aid material can be controlled in an open-loop and/or closed-loop manner depending on the degree of loading of the filter aid material with paint overspray.

2. Filter installation according to claim 1, **characterized in that** a part of the system of paint overspray and filter aid material that is processed in the receiving container (124) and/or a part of the system of paint overspray and filter aid material that is removed from the receiving container (124) and processed outside the receiving container (124) can be introduced into the raw gas flow again as filter aid material.

3. Filter installation according to either claim 1 or claim 2, **characterized in that** processing of the system of paint overspray and filter aid material can be carried out outside the filter device (114) by means of the processing device (134), it being possible for at least part of the system of paint overspray and filter aid material to be removed from the receiving container (124) and processed outside the receiving container (124).

4. Filter installation according to any of claims 1 to 3, **characterized in that** the processing device (134) comprises a mechanical treatment device (160) and/or a pneumatic treatment device (170), by means of which the system of paint overspray and filter aid material can be mechanically treated and/or can be pressurized with air in order to process said system.

5. Filter installation according to any of claims 1 to 4, **characterized in that** the filter installation (112) comprises a storage device (180) for receiving and storing filter aid material and/or a system of paint overspray and filter aid material.

6. Filter installation according to claim 5, **characterized in that** the storage device (180) is an intermediate storage device (184) for intermediate storage of a processed system of paint overspray and filter aid material, it being possible for the processed system of paint overspray and filter aid material to be fed to the intermediate storage device (184) from the processing device (134) and for the processed system of paint overspray and filter aid material to be provided for the filter device (114) by means of the intermediate storage device (184).

7. Filter installation according to either claim 5 or claim 6, **characterized in that** the storage device (180) is an intermediate storage device (184) for intermediate storage of a system of paint overspray and filter aid material that has been removed from the receiving container (124) and is to be fed to the processing device (134), it being possible for the system of paint overspray and filter aid material to be fed to the intermediate storage device (184) from the receiving container (124) and for the system of paint overspray and filter aid material to be provided for the processing device (134) by means of the intermediate storage device (184).

8. Filter installation according to any of claims 1 to 7, **characterized in that**, by means of the open-loop control device (175) and/or the closed-loop control device (177), it is possible to determine whether the filter aid material provided to the filter device (114) for cleaning the raw gas flow is unloaded, fresh filter aid material or a system of paint overspray and filter aid material.

9. Method for operating a filter installation (112), in particular a filter installation (112) according to any of claims 1 to 8, comprising the following:
- supplying a raw gas flow loaded with paint overspray to a regenerable filter device (114) of a filter installation (112);
- introducing filter aid material into the raw gas flow;
- depositing a system of paint overspray and filter aid material on a filter element (120) of the filter device (114), which, during filter operation, is provided with a barrier layer and/or a protective layer which comprises filter aid material, and
- receiving the system of paint overspray and filter aid material in a receiving container (124),
**characterized in that**
at least part of the system of paint overspray and filter aid material is processed by means of a processing device (134), the system of paint overspray and filter aid material being thermally treated by means of a thermal treatment device (140) in order to process said system,
the thermal treatment device (140) being designed as a combustion device,
a fluidized bed dryer being used as the combustion device, the system of paint overspray and filter aid material being dried, burned and/or combusted in order to process said system, a mixing ratio for mixing the unloaded, fresh filter aid material with the system of paint overspray and filter aid material being controlled in an open-loop and/or closed-loop manner depending on the degree of loading of the filter aid material with paint overspray.

10. Method according to claim 9, **characterized in that** part of the system of paint overspray and filter aid material is processed in the receiving container (124) and/or is removed from the receiving container (124) and processed outside the receiving container (124) and introduced into the raw gas flow again as filter aid material.

11. Method according to either claim 9 or claim 10, **characterized in that** at least part of the system of paint overspray and filter aid material is removed from the receiving container (124) and processed outside the receiving container (124).

12. Method according to any of claims 9 to 11, **characterized in that** the system of paint overspray and filter aid material is subjected to compressed air in order to process said system.

13. Method according to any of claims 9 to 12, **characterized in that** at least one processing aid is added to the system of paint overspray and filter aid material in order to process said system.

14. Method according to any of claims 9 to 13, **characterized in that** at least two method steps are carried out in order to process the system of paint overspray and filter aid material.

## Revendications

1. Installation de filtration, comprenant un dispositif de filtration (114) permettant de nettoyer un flux de gaz brut chargé d'une surpulvérisation de peinture, dans laquelle le dispositif de filtration (114) est conçu comme un dispositif de filtration (114) régénérable et comprend les étapes suivantes :
- un élément de filtration (120), lequel, pendant le fonctionnement de la filtration, est pourvu d'une couche barrière et/ou d'une couche protectrice qui comprend un matériau d'aide à la filtration, la surpulvérisation de peinture pouvant être séparée du flux de gaz brut chargé d'une surpulvérisation de peinture avec le matériau d'aide à la filtration fourni au flux de gaz brut sur l'élément de filtration (120) ;
- un récipient de réception (124) permettant de recevoir un système composé de la surpulvérisation de peinture et du matériau d'aide à la filtration ; et
- un dispositif de retrait (128) permettant de retirer au moins une partie du système constitué de la surpulvérisation de peinture et du matériau d'aide à la filtration du récipient de réception (124),
**caractérisée en ce**
**que** l'installation de filtration (112) comprend un dispositif de préparation (134) permettant de préparer le système constitué de la surpulvérisation de peinture et du matériau d'aide à la filtration, le dispositif de préparation (134) comprenant un dispositif de traitement thermique (140) au moyen duquel le système constitué de la surpulvérisation de peinture et du matériau d'aide à la filtration peut être traité thermiquement pour sa préparation,
dans laquelle le dispositif de traitement thermique (140) est conçu comme un dispositif de combustion,
dans laquelle un sécheur à lit fluidisé est utilisé comme dispositif de combustion, le système constitué de la surpulvérisation de peinture et du matériau d'aide à la filtration étant séché, brûlé et/ou incinéré pour sa préparation,
dans laquelle l'installation de filtration (112) comprend un dispositif de mélange (186) au moyen duquel un matériau d'aide à la filtration frais et déchargé et un système constitué de la surpulvérisation de peinture et du matériau d'aide à la filtration peuvent être combinés et mélangés,
dans laquelle l'installation de filtration (112) comprend un dispositif de commande (175) et/ou un dispositif de régulation (177) au moyen desquels un rapport de mélange pour le mélange du matériau d'aide à la filtration frais et déchargé avec le système constitué de la surpulvérisation de peinture et du matériau d'aide à la filtration peut être commandé et/ou régulé en fonction du degré de charge du matériau d'aide à la filtration avec la surpulvérisation de peinture.

2. Installation de filtration selon la revendication 1, **caractérisée en ce qu'**une partie du système constitué de la surpulvérisation de peinture et du matériau d'aide à la filtration préparée dans le récipient de réception (124) et/ou une partie du système constitué de la surpulvérisation de peinture et du matériau d'aide à la filtration retirée du récipient de réception (124) et préparée à l'extérieur du récipient de réception (124) peuvent être à nouveau introduites dans le flux de gaz brut en tant que matériau d'aide à la filtration.

3. Installation de filtration selon l'une des revendications 1 ou 2, **caractérisée en ce qu'**une préparation du système constitué de la surpulvérisation de peinture et du matériau d'aide à la filtration peut être effectuée à l'extérieur du dispositif de filtration (114) à l'aide du dispositif de préparation (134), au moins une partie du système constitué de la surpulvérisation de peinture et du matériau d'aide à la filtration pouvant être retirée du récipient de réception (124) et traitée à l'extérieur du récipient de réception (124).

4. Installation de filtration selon l'une des revendications 1 à 3, **caractérisée en ce que** le dispositif de préparation (134) comprend un dispositif de traitement mécanique (160) et/ou un dispositif de traitement pneumatique (170), au moyen desquels le système constitué de la surpulvérisation de peinture et du matériau d'aide à la filtration peut être traité mécaniquement et/ou pressurisé avec de l'air pour sa préparation.

5. Installation de filtration selon l'une des revendications 1 à 4, **caractérisée en ce que** l'installation de filtration (112) comprend un dispositif de stockage (180) permettant de recevoir et de stocker un matériau d'aide à la filtration et/ou un système constitué de la surpulvérisation de peinture et du matériau d'aide à la filtration.

6. Installation de filtration selon la revendication 5, **caractérisée en ce que** le dispositif de stockage (180) est un dispositif de stockage intermédiaire (184) pour le stockage intermédiaire d'un système constitué de la surpulvérisation de peinture et du matériau d'aide à la filtration préparé, le système constitué de la surpulvérisation de peinture et du matériau d'aide à la filtration préparé provenant du dispositif de préparation (134) pouvant être fourni au dispositif de stockage intermédiaire (184) et le système constitué de la surpulvérisation de peinture et du matériau d'aide à la filtration préparé pouvant être mis à disposition pour le dispositif de filtration (114) au moyen du dispositif de stockage intermédiaire (184).

7. Installation de filtration selon l'une des revendications 5 ou 6, **caractérisée en ce que** le dispositif de stockage (180) est un dispositif de stockage intermédiaire (184) pour le stockage intermédiaire d'un système constitué de la surpulvérisation de peinture et du matériau d'aide à la filtration qui a été retiré du récipient de réception (124) et doit être fourni au dispositif de préparation (134), le système constitué de la surpulvérisation de peinture et du matériau d'aide à la filtration provenant du récipient de réception (124) pouvant être fourni au dispositif de stockage intermédiaire (184) et le système constitué de la surpulvérisation de peinture et du matériau d'aide à la filtration pouvant être mis à disposition pour le dispositif de préparation (134) au moyen du dispositif de stockage intermédiaire (184).

8. Installation de filtration selon l'une des revendications 1 à 7, **caractérisée en ce que** le dispositif de commande (175) et/ou le dispositif de régulation (177) peuvent être utilisés pour déterminer si le matériau d'aide à la filtration mis à disposition pour le dispositif de filtration (114) pour le nettoyage du flux de gaz brut est un matériau d'aide à la filtration frais et déchargé ou un système constitué d'une surpulvérisation de peinture et d'un matériau d'aide à la filtration.

9. Procédé de fonctionnement d'une installation de filtration (112), en particulier d'une installation de filtration (112) selon l'une des revendications 1 à 8, comprenant les étapes suivantes :
- fourniture d'un flux de gaz brut chargé d'une surpulvérisation de peinture à un dispositif de filtration (114) régénérable d'une installation de filtration (112) ;
- introduction d'un matériau d'aide à la filtration dans le flux de gaz brut ;
- séparation d'un système constitué de la surpulvérisation de peinture et du matériau d'aide à la filtration sur un élément de filtration (120) du dispositif de filtration (114), lequel élément de filtration est pourvu d'une couche barrière et/ou d'une couche protectrice comprenant un matériau d'aide à la filtration pendant le fonctionnement de la filtration, et
- réception du système constitué de la surpulvérisation de peinture et du matériau d'aide à la filtration dans un récipient de réception (124),
**caractérisé en ce**
**qu'**au moins une partie du système constitué de la surpulvérisation de peinture et du matériau d'aide à la filtration est préparée au moyen d'un dispositif de préparation (134), le système constitué de la surpulvérisation de peinture et du matériau d'aide à la filtration étant traité thermiquement au moyen d'un dispositif de traitement (140) pour son traitement,
dans lequel le dispositif de traitement thermique (140) est conçu comme un dispositif de combustion,
dans lequel un sécheur à lit fluidisé est utilisé comme dispositif de combustion, le système constitué de la surpulvérisation de peinture et du matériau d'aide à la filtration étant séché, brûlé et/ou incinéré pour son traitement,
dans lequel un rapport de mélange pour le mélange du matériau d'aide à la filtration frais et déchargé avec le système constitué de la surpulvérisation de peinture et du matériau d'aide à la filtration est commandé et/ou régulé en fonction du degré de charge du matériau d'aide à la filtration avec la surpulvérisation de peinture.

10. Procédé selon la revendication 9, **caractérisé en ce qu'**une partie du système constitué de la surpulvérisation de peinture et du matériau d'aide à la filtration est préparée dans le récipient de réception (124) et/ou retirée du récipient de réception (124) et préparée à l'extérieur du récipient de réception (124) et introduite à nouveau dans le flux de gaz brut en tant que matériau d'aide à la filtration.

11. Procédé selon l'une des revendications 9 ou 10, **caractérisé en ce qu'**au moins une partie du système constitué de la surpulvérisation de peinture et du matériau d'aide à la filtration est retirée du récipient de réception (124) et préparée à l'extérieur du récipient de réception (124).

12. Procédé selon l'une des revendications 9 à 11, **caractérisé en ce que** le système constitué de la surpulvérisation de peinture et du matériau d'aide à la filtration est pressurisé par de l'air comprimé pour son traitement.

13. Procédé selon l'une des revendications 9 à 12, **caractérisé en ce qu'**au moins un auxiliaire de préparation est fourni au système constitué de la surpulvérisation de peinture et du matériau d'aide à la filtration pour son traitement.

14. Procédé selon l'une des revendications 9 à 13, **caractérisé en ce qu'**au moins deux étapes de procédé sont réalisées pour la préparation du système constitué de la surpulvérisation de peinture et du matériau d'aide à la filtration.
